# EUROPÄISCHE PATENTSCHRIFT

(11) **EP 2 616 473 B1**
(45) Veröffentlichungstag und Bekanntmachung des Hinweises auf die Patenterteilung: **09.11.2016**
(21) Anmeldenummer: 11760704.4
(22) Anmeldetag: 13.09.2011
(51) Int. Cl.: C07F 9/48, C07F 9/38, C08K 5/5313, C08L 25/06, C08L 77/00, C07F 9/30

(54) **PHOSPHORHALTIGE MISCHUNGEN, VERFAHREN ZU DEREN HERSTELLUNG UND IHRE VERWENDUNG**
MIXTURES CONTAINING PHOSPHOROUS, PROCEDURES FOR THEIR PRODUCTION AND USE
CONTENIR DE MÉLANGES PHOSPHOREUX, PROCÉDURES POUR LEUR PRODUCTION ET UTILISATION

(30) Priorität: 14.09.2010 DE 102010047790
(43) Veröffentlichungstag der Anmeldung: 24.07.2013
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Mikulecky, Klaus
(86) Internationale Anmeldenummer: PCT/EP2011/004597
(87) Internationale Veröffentlichungsnummer: WO 2012/034680

(56) Entgegenhaltungen:
- DE-A1- 1 933 396
- DE-A1- 3 126 179
- GB-A- 1 039 448
- NIFANT'EV E E: "Acid catalysis in the hydrophosphorylation of olefins", JOURNAL OF GENERAL CHEMISTRY USSR, CONSULTANTS BUREAU, NEW YORK, NY, US, Bd. 50, Nr. 8/01, 1. August 1980 (1980-08-01), Seiten 1416-1423, XP002093427, ISSN: 0022-1279
- DATABASE CA [Online] CHEMICAL ABSTRACTS SERVICE, COLUMBUS, OHIO, US; 1988, CHAHAL, SURINDER PALL: "Synthesis of organophosphorus acids and their evaluation as hydrometallurgical extractants for cobalt and nickel", XP002665555, gefunden im STN Database accession no. 1989:79841 & CHAHAL, SURINDER PALL: "Synthesis of organophosphorus acids and their evaluation as hydrometallurgical extractants for cobalt and nickel", 238 PP. AVAIL.: UNIV. MICROFILMS INT., ORDER NO. BRDX81447 FROM: DISS. ABSTR. INT. B 1988, 49(3), 714, 1987,

## Beschreibung

Die vorliegende Erfindung betrifft phosphorhaltige Mischungen, ein Verfahren zu deren Herstellung und deren Verwendung.

Phosphorhaltige Mischungen mit ausgewählten Zielprodukten lassen sich bisher nicht oder nur sehr schwierig herstellen.

So lehrt Petrov (Otd. Obshch. Tekh. Khim. (1967) 181-6) die Herstellung von Dicyclohexylphosphinsäure aus Natriumhypophosphitmonohydrat und Cyclohexen in Methanol durch portionsweise Zugabe von tert-Bu₂O₂, einem lipophilen Initiator, während 12 Stunden bei erhöhten Temperaturen.

Nifant'ev (Zh.Obsh Khim 50(1980)1416; CAS 93:238169) lehrt die Herstellung von Dialkylphosphinsäuren, in dem Natriumhypophosphit mit konz. Schwefelsäure oder Essigsäure, einem Olefin (n-Hepten, n-Decen) und Bisbenzoylperoxid, ebenfalls einem lipophilen Initiator, in Wasser und Dioxan zur Reaktion gebracht wird. Offenbar sind also Wasser-Ether-Mischungen und lipophile Initiatoren Vorraussetzung für die Herstellung von längerkettigen Phosphinsäuren.

Nach dem Stand der Technik sind wässrige Systeme und hydrophile Initiatoren nur für gasförmige kurzkettige offenkettige Olefine einsetzbar.

Die Lehre des Standes der Technik ist, dass längerkettige und cyclische Olefine nur mit lipophilen Initiatoren an das Phosphoratom addierbar sind. Darüber hinaus werden organische Lösungsmittel in erheblichen Mengen benötigt.

Eine Gewinnung von kohlenstoffketten-tragenden Phosphinsäuren unmittelbar aus der Reaktionslösung wird bisher nicht beschrieben.

Der vorliegenden Erfindung liegt daher die Aufgabe zugrunde, phosphorhaltige Mischungen selbst sowie ein Verfahren zur Herstellung von phosphorhaltigen Mischungen, insbesondere von Mischungen von ausgewählten Dialkylphosphinsäuren zur Verfügung zu stellen.

Es bestand somit die Aufgabe, die Nachteile des Standes der Technik hinsichtlich des Initiators und Lösungsmittelsystems zu vermeiden.

Es wurde überraschend gefunden, dass flüssige langkettige Olefine radikalisch initiiert auch in wässrigen Systemen reagieren können. Obwohl hydrophile und lipophile Radikalbildner möglich sind, sind die hydrophilen Radikalbildner bevorzugt.

Außerdem wurde gefunden, dass die phosphorhaltigen Mischungen nach dem erfindungsgemäßen Verfahren direkt aus der Reaktionslösung abgetrennt werden können, so dass sich die Synthese sehr einfach handhaben lässt.

In einer weiteren Ausgestaltung der Erfindung erfolgt die Abtrennung ohne Verwendung von organischen Lösungsmitteln.

In einer besonders bevorzugten Ausführungsform erfolgt dies, indem die (Dialkyl)Phosphinsäure ohne Zusatz von Säure freigesetzt wird.

Der Schutzumfang der Anmeldung wird ausschliesslich durch die Ansprüche bestimmt und betrifft allgemein somit phosphorhaltige Mischungen, enthaltend
a) 50 - 100 mol-% Verbindungen der Formel (1) 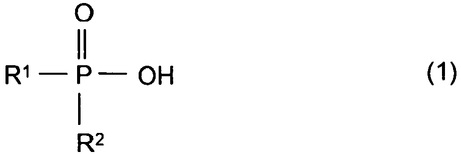 worin R¹ und R² gleich oder verschieden sind und C₆-C₉-Alkyl,
b) 0 bis 50 mol-% Verbindungen der Formel (1), worin R¹ H und R² C₆-C₉-Alkyl,
c) 0 bis 50 mol-% Verbindungen der Formel (1), worin R¹ OH und R² C₆-C₉-Alkyl,
d) 0 bis 50 mol-% Verbindungen der Formel (1), worin R¹ OH und R² H und
e) 0 bis 50 mol-% Verbindungen der Formel (1), worin R¹ H und R² H bedeuten,
wobei die Summe von a), b), c), d) und e) immer 100 mol-% ergibt.

Bevorzugt enthalten die Mischungen
a) 50,10 bis 99,9 mol-% Verbindungen der Formel (1), worin R¹ und R² gleich oder verschieden sind und C₆-C₉-Alkyl,
b) 0,05 bis 24,95 mol-% Verbindungen der Formel (1), worin R¹ H und R² C₆-C₉-Alkyl und
c) 0,05 bis 24,95 mol-% Verbindungen der Formel (1), worin R¹ H und R² H bedeuten,
wobei die Summe von a), b) und c) immer 100 mol-% ergibt.

Bevorzugt enthalten die Mischungen auch
a) 50,10 bis 99,9 mol-% Verbindungen der Formel (1), worin R¹ und R² gleich oder verschieden sind und C₆-C₉-Alkyl,
b) 0,05 bis 24,95 mol-% Verbindungen der Formel (1), worin R¹ OH und R² C₆-C₉-Alkyl und
c) 0,05 bis 24,95 mol-% Verbindungen der Formel (1), worin R¹ OH und R² H bedeuten,
wobei die Summe von a), b) und c) immer 100 mol-% ergibt.

Insbesondere enthalten die Mischungen
a) 50,20 bis 99,8 mol-% Verbindungen der Formel (1), worin R¹ und R² gleich oder verschieden sind und C₆-C₉-Alkyl,
b) 0,05 bis 12,55 mol-% Verbindungen der Formel (1), worin R¹ H und R² C₆-C₉-Alkyl,
c) 0,05 bis 12,55 mol-% Verbindungen der Formel (1), worin R¹ OH und R² C₆-C₉-Alkyl,
d) 0,05 bis 12,55 mol-% Verbindungen der Formel (1), worin R¹ OH und R² H und
e) 0,05 bis 12,55 mol-% Verbindungen der Formel (1), worin R¹ H und R² H bedeuten,
wobei die Summe von a), b), c), d) und e) immer 100 mol-% ergibt.

Bevorzugt sind R¹ und R² gleich oder verschieden und bedeuten cyclisches, isocyclisches, offenkettiges, linear offenkettiges und/oder verzweigt offenkettiges C₆-C₉-Alkyl.

Bevorzugt sind R¹ und R² gleich oder verschieden und bedeuten Pentyl, Cyclopentyl, Methylpentyl, Methylcyclopentyl, Dimethylpentyl, Dimethylcyclopentyl, Trimethylpentyl, Trimethylcyclopentyl, Hexyl, Cyclohexyl, Methylhexyl, Methylcyclohexyl, Dimethylhexyl, Dimethylcyclohexyl, Trimethylhexyl und/oder Trimethylcyclohexyl.

Die Erfindung betrifft auch ein Verfahren zur Herstellung von phosphorhaltigen Mischungen nach mindestens einem der Ansprüche 1 bis 6, dadurch gekennzeichnet, dass man eine Phosphinatquelle, ein bei Raumtemperatur (20 - 25 °C) flüssiges Olefin und einen Radikalinitiator in Gegenwart von Selektivitätslenkern in einem wässrigen Medium umsetzt.

Bevorzugt setzt man weiterhin ein Additiv zu.

Bevorzugt handelt es sich bei der Phosphinatquelle um Natriumhypophosphit, hypophosphorige Säure, Erdalkalihypophosphit, elementarem Phosphor, Phosphortrichlorid und/oder eine andere Phosphinatquelle.

Bevorzugt handelt es sich bei dem flüssigen Olefin um Penten, Cyclopenten, Cyclopentadien, Hexen, Methylhexen, Dimethylhexen, Trimethylhexen, Methylhexadien, Cyclohexen, Methylcyclohexen, Dimethylcyclohexen, 1,3-Cyclohexadien, Methyl-1,3-cyclohexadien, Dimethyl-1,3-cyclohexadien, Trimethyl-1,3-cyclohexadien, 1,4-Cyclohexadien, Methyl-1,4-cyclohexadien, Dimethyl-1,4-cyclohexadien oder beliebige Gemische davon.

Bevorzugt handelt es sich bei dem Selektivitätslenker um organische Phosphite, organische Phosphonite, sterisch gehinderte Amine, aromatische Amine, sterisch gehinderte Phenole, alkylierte Monophenole, Phenothiazine, Organoschwefelverbindungen, Alkylthiomethylphenole, Tocopherole, Alkylidenbisphenole, O-/N- und S-Benzylverbindungen, hydroxybenzylierte Malonate, Hydrochinone, alkylierte Hydrochinone, hydroxylierte Thiodiphenylether, Alkylidenbisphenole, Hydroxybenzyl-Aromaten, Triazinverbindungen, Benzylphosphonate, Acylaminophenole, Ester der beta-(3.5-Di-tert-butyl-4-hydroxyphenyl)-propionsäure mit ein- oder mehrwertigen Alkoholen, Ester der beta-(5-tert-Butyl-4-hydroxy-3-methylphenyl)-propionsäure mit ein- oder mehrwertigen Alkoholen, Ester der beta-(3,5-Dicyclohexyl-4-hydroxyphenyl)-propionsäure mit ein- oder mehrwertigen Alkoholen, Ester der 3,5-Di-tert-butyl-4-hydroxyphenylessigsäure mit ein- oder mehrwertigen Alkoholen und/oder Amide der beta-(3,5-Di-tert-butyl-4-hydroxyphenyl)-propionsäure.

Bevorzugt handelt es sich bei dem Radikalinitiator um wasserlösliche Peroxoverbindungen oder Azo-Verbindungen.

Bevorzugt handelt es sich bei den Peroxoverbindungen um Kaliumpersulfat, Natriumpersulfat, Ammoniumpersulfat, Kaliumperoxomonosulfat, Natriumperoxomonosulfat, Ammoniumperoxomonosulfat, Wasserstoffperoxid, Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid, Perameisensäure, Peressigsäure, 2,4-Dichlorobenzoylperoxid und/oder Decanoylperoxid.

Bevorzugt handelt es sich bei den Azo-Verbindungen um 2,2'-Azobis[2-(5-methyl-2-imidazolin-2-yl)propan]dihydrochlorid, 2,2'-Azobis[2-(2-imidazolin-2-yl)propan]dihydrochlorid, 2,2'-Azobis[2-(2-imidazolin-2-yl)propandisulfatedihydrat, 2,2'-Azobis(2-amidinopropan)hydrochlorid, 2,2'-Azobis[N-(2-carboxyethyl)-2-methylpropionamidin]tetrahydrat, 2,2'-Azobis[2-(3,4,5,6-tetrahydropyrimidin-2-yl)propan]dihydrochlorid, 2,2'-Azobis{2-[1-(2-hydroxyethyl)-2-imidazolin-2-yl]propan}dihydrochlorid, 2,2'-Azobis[2-(2-imidazolin-2-yl)propan], 2,2'-Azobis{2-Methyl-N-[1,1-bis(hydroxymethyl)-2-hydroxyethyl] propionamid, 2,2'-Azobis{2-Methyl-N-[2-(1-hydroxybuthyl)]propionamid} und/oder 2,2'-Azobis[2-Methyl-N-(2-hydroxyethyl)propionamid].

Das erfindungsgemäße Verfahren ist weiterhin dadurch gekennzeichnet, dass man nach der Umsetzung die so erhaltene Mischung aufarbeitet durch
a) Versetzen der Reaktionslösung mit Mineralsäure
b) Abtrennen der dann erhaltenen Mischung
und danach mindestens einen der nachfolgenden Schritte
c) Waschen der Mischung mit Wasser
d) Trocknen der Mischung
e) Mahlen der Mischung
f) Sieben der Mischung
ausführt.

In einer anderen Ausführungsweise wird nach der Umsetzung die so erhaltene Mischung aufgearbeitet durch
a) Versetzen der Reaktionslösung mit Mineralsäure
b) Versetzen der Reaktionslösung mit Lösungsmittel und Abtrennen der erhaltenen Lösungsmittelphase
und danach mindestens einen der nachfolgenden Schritte
c) Extraktion der Lösungsmittelphase mit Wasser
d) Einengen der Lösungsmittelphase und Kristallisieren der Mischung
e) Abtrennen der Mischung
f) Waschen der Mischung mit Wasser
g) Trocknen der Mischung
h) Mahlen der Mischung
i) Sieben der Mischung
   ausgeführt.

In einer weiteren Ausführungsform wird nach der Umsetzung die so erhaltene Mischung aufgearbeitet durch
a) Versetzen der Reaktionslösung mit Mineralsäure
b) Abtrennen des Feststoffes
c) Einengen der Reaktionslösung durch Eindampfen
d) Versetzen des erhaltenen Eindampfrückstandes mit Lösungsmittel und danach mindestens einen der nachfolgenden Schritte
e) Extraktion der Lösungsmittelphase mit Wasser
f) Einengen der Lösungsmittelphase und Kristallisation der erhaltenen Mischung
g) Abtrennen der Mischung
h) Trocknen der Mischung
i) Mahlen der Mischung
j) Sieben der Mischung
ausgeführt.

Bei einer anderen Verfahrensvariante wird nach der Umsetzung die so erhaltene Mischung aufgearbeitet durch
a) Eindampfen der Reaktionslösung
b) Versetzen mit Lösungsmittel
c) Versetzen der Reaktionslösung mit Mineralsäure
d) Abfiltrieren des Feststoffes von der Lösungmittelphase
e) Eindampfen der Lösungsmittelphase
f) Versetzen des erhaltenen Eindampfrückstandes mit Lösungsmittel und danach mindestens einen der nachfogenden Schritte
g) Extraktion der Lösungsmittelphase 2 mit Wasser
h) Einengen der Lösungmittelphase 2 und Kristallisation der Mischung
i) Trocknen der Mischung
j) Mahlen der Mischung
k) Sieben der Mischung
ausgeführt.

Die Erfindung betrifft auch eine flammfest ausgerüstete Kunststoff-Formmasse, enthaltend eine phosphorhaltige Mischung gemäß einem oder mehreren der Ansprüche 1 bis 4 dadurch gekennzeichnet, dass es sich bei dem Kunststoff um thermoplastischen Polymere der Art Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) Polypropylen, Polymethylmethacrylat (PMMA), XPS (Extrudierter Polystyrol-Hartschaum), EPS (expandiertes Polystyrol) oder PPE/HIPS (Polyphenylenether/Polystyrol-Hl) Kunststoffe handelt und dass sie 50 bis 98 Gew.-% Kunststoff-Formmasse und 2 bis 50 Gew.-% der phosphorhaltigen Mischung gemäß einem oder mehreren der Ansprüche 1 bis 6 enthält.

Die Erfindung betrifft ebenfalls Polymer-Formkörper, -Filme, -Fäden und -Fasern enthaltend eine phosphorhaltige Mischung gemäß einem oder mehreren der Ansprüche 1 bis 4, dadurch gekennzeichnet, dass es sich bei dem Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol), Polyamid, Polyester Polypropylen, Polymethylmethacrylat (PMMA), XPS (Extrudierter Polystyrol-Hartschaum), EPS (expandiertes Polystyrol) und/oder ABS handelt und dass sie 50 bis 98 Gew.-% Polymer-Formkörper, -Filme, -Fäden und/oder -Fasern und 2 bis 50 Gew.-% der phosphorhaltigen Mischung gemäß einem oder mehreren der Ansprüche 1 bis 6 enthält.

Bevorzugte C₆-C₉-Alkyl-Substituenten sind cyclische, isocyclische, offenkettige, linear offenkettige und verzweigt offenkettige Substituenten.

Bevorzugte C₆-C₉-Alkyl-Substituenten sind C₆-C₉-n-Alkyl-, -Alkylcycloalkyl, -Dialkylcycloalkyl, -Trialkylcycloalkyl.

Bevorzugte C₆-C₉-Alkyl-Substituenten sind Pentyl, Cyclopentyl, Methylpentyl, Methylcyclopentyl, Dimethylpentyl, Dimethylcyclopentyl, Trimethylpentyl, Trimethylcyclopentyl, Hexyl, Cyclohexyl, Methylhexyl, Methylcyclohexyl, Dimethylhexyl, Dimethylcyclohexyl, Trimethylhexyl und Trimethylcyclohexyl.

Überraschenderweise wurde gefunden, dass erfindungsgemäße Mischungen im Flammschutz der mischungsfreien Substanz, welche 100 mol-% Verbindungen der Formel (1), worin R¹ und R² gleich oder verschieden sind und C₆-C₉-Alkyl bedeuten, überlegen sind. Während reine Phosphinsäure in PMMA, PP, Nylon, PS, PS Butadien, ABS bei Konzentrationenen bis zu 10 % im Flammschutz versagt (DE-A-1 933 396), kann mit den erfindungsgemäßen Mischungen eine Flammschutz-Klassifizierung erhalten werden.

Bevorzugt sind Mischungen enthaltend Verbindungen der Formel (1) worin R¹ und R² gleich oder verschieden sind und C₆-C₉-Alkyl bedeuten mit Verbindungen der Formel (1) worin R¹ OH und R² C₆-C₉-Alkyl bedeuten.

Bevorzugt sind auch Mischungen enthaltend Verbindungen der Formel (1) worin R¹ und R² gleich oder verschieden sind und C₆-C₉-Alkyl bedeuten mit Verbindungen der Formel (1) worin R¹ = OH und R² = H bedeuten.

Bevorzugt sind auch Mischungen enthaltend Verbindungen der Formel (1) worin R¹ und R² gleich oder verschieden sind und C₆-C₉-Alkyl bedeuten mit Verbindungen der Formel (1) worin R¹ = H und R² = H bedeuten.

Bevorzugt sind auch Mischungen enthaltend Verbindungen der Formel (1) worin R¹ und R² gleich oder verschieden sind und C₆-C₉-Alkyl bedeuten mit Verbindungen der und Formel (1) worin R¹ = OH und R² = C₆-C₉-Alkyl bedeuten und mit Verbindungen der Formel (1) worin R¹ = OH und R² = H bedeuten.

Bevorzugt weist die erfindungsgemäße Mischung einen Phosphorgehalt von 12,5 bis 15 Gew.-% auf.

Bevorzugt weist die erfindungsgemäße Mischung eine Teilchengröße von 0,1 bis 1.000 µm auf.

Bevorzugt weist die erfindungsgemäße Mischung eine Schüttdichte von 80 bis 800 g/l, besonders bevorzugt 200 bis 700 g/l auf.

Bevorzugt weist die erfindungsgemäße Mischung einen Gehalt an Initiatoren-Endgruppen 0,0001 bis 10 mol-%, besonders bevorzugt 0,001 bis 1 mol-%. Initiatoren-Endgruppen können beim Radikal-Kettenabbruch an das letzte Molekül der Radikalkette gebunden bleiben.

Bevorzugt weist die erfindungsgemäße Mischung einen L-Farbwerte von 85 bis 99,9, besonders bevorzugt von 90 bis 98 auf.

Bevorzugt weist die erfindungsgemäße Mischung einen a-Farbwerte von -4 bis +9, besonders bevorzugt -2 bis +6, auf.

Bevorzugt weist die erfindungsgemäße Mischung einen b-Farbwerte von -2 bis +6, besonders bevorzugt -1 bis +3, auf.

Die Farbwerte werden im System nach Hunter (CIE-LAB-System, Commission Internationale d'Eclairage) angegeben. L-Werte gehen von 0 (schwarz) bis 100 (weiß), α-Werte von -a (grün) bis +a (rot) und b-Werte von -b (blau) bis +b (gelb).

Alternativ kann die Phosphinatquelle durch Umsetzung eines Phosphinatsalzes mit Säure gebildet werden. Bevorzugt erfolgt das durch Wahl eines geeigneten pH-Wertes in der Reaktionslösung. Der pH-Wert der Reaktionslösung beträgt bevorzugt 1 bis 10, ganz besonders bevorzugt 2 bis 6.

Alternativ kann die Olefinquelle durch Umsetzung von Precursorsubstanzen gebildet werden. Bevorzugt kann die Olefinquelle durch Dehydratisierung von offenkettigen, verzweigten offenkettigen oder cyclischen Alkoholen wie z. B. Hexanol, Heptanol, Octanol, Nonanol, 2-Ethyl-1-hexanol, 3-Methyl-3-hexanol, Cyclohexanol, Methylcyclohexanol, Cyclopentanol und/oder Methylcyclopentanol, 1-Methylcyclopentanol gebildet werden.

Bevorzugte Reaktionsbedingungen sind Temperaturen von 0 bis 300 °C, besonders bevorzugt von 50 bis 170 °C und Reaktionszeiten von 10⁻⁷ bis 10² h. Der Druck kann sich zwischen 1 bis 200 MPa (= 0,00001 bis 200 bar), bevorzugt zwischen 10 Pa bis 10 MPa bewegen.

Bevorzugt ist ein Energieeintrag von 0,083 bis 10 kW/m³, besonders bevorzugt 0,33 - 1,65 kW/m³.

Die Abtrennung der erfindungsgemäßen phosphorhaltigen Mischung kann nach verschiedenen Methoden erfolgen. Die sind in den Ansprüchen 14 bis 17 beschrieben.

Es wurde gefunden, dass keine weitere Verwendung von organischen Lösungsmitteln nötig ist. Überraschenderweise scheidet sich die erfindungsgemäße phosphorhaltige Mischung nach dem Verfahren des Anspruchs 14 vollständig aus Wasser ab.

Bei dem Versetzen der Reaktionslösung mit Mineralsäure ist diese bevorzugt Salzsäure, Schwefelsäure oder Phosphorsäure. Bevorzugt ist die Verwendung von saurem Doppelsalz (z. B. Natriumbisulfat). Bevorzugt bildet sich das saure Doppelsalz aus dem Initiator.

Bei dem Versetzen der Reaktionslösung ist der pH bevorzugt zwischen 0 und 5.

Bei dem Waschen der erfindungsgemäßen phosphorhaltigen Mischung mit Wasser ist das Verhältnis Wasser/Produkt 1150 mol/1 mol bis 1 mol/1 mol.

Bei dem Trocknen der erfindungsgemäßen phosphorhaltigen Mischung sind die Bedingungen bevorzugt 20 bis 250 °C und 1 mbar bis 6 bar.

Bei den Abtrennverfahren nach Anspruch 15 ist das Lösungsmittel bevorzugt Heptan, das eingesetzte Olefin oder Essigsäure.

Bei den Abtrennverfahren nach Anspruch 16 oder 17 ist das Lösungsmittel bevorzugt Essigsäure.

Die Phosphinatquelle dient als Lieferant des Phosphoratoms. Im Zuge der Reaktionen werden zwei Olefinmoleküle an das Phosphoratom addiert. Alternativ kann die Phosphinatquelle durch den eingesetzten Initiator zu Phosphit oxidiert werden.

Alternativ kann nur ein Olefinmolekül addiert und das Reaktionsprodukt zu Phosphonat oxidiert werden. Die Bildung von Verbindungen der Formel (1), worin R¹ H und R² C₆-C₉-Alkyl, worin R¹ OH und R² C₆-C₉-Alkyl, worin R¹ OH und R² H und worin R¹ H und R² H bedeuten, kann durch Selektivitätslenker reguliert werden.

Bevorzugt handelt es sich bei der phosphorhaltigen Verbindung (Phosphinatquelle) um hypophosphorige Säure und/oder deren Salze bzw. Ester.

Bevorzugt kann hypophosphorige Säure aus geeigneten Salzen durch Umsetzung mit Säuren hergestellt werden. Geeignete Salze sind solche mit Kationen der 1. Hauptgruppe, Kationen der 2. Hauptgruppe und Stickstoffbasen
Geeignete Kationen der 1. Hauptgruppe sind Natrium und Kalium.
Geeignete Kationen der 2. Hauptgruppe sind Calcium und Magnesium

Geeignete Stickstoffbasen sind Ammonium und Anilinium.

Bevorzugt kann hypophosphorige Säure bzw. deren Salze durch Hydrolyse von dreiwertigen Phosphorverbindungen wie z. B. Phosphortrichlorid hergestellt werden.

Bevorzugt kann hypophosphorige Säure bzw. deren Salze durch alkalische Hydrolyse aus elementarem Phosphor hergestellt werden.

Bevorzugt kann hypophosphorige Säure in Mischung mit Wasser eingesetzt werden. Dann ist das Verhältnis von H₂O zu P bevorzugt 33 mol zu 1 mol bis 0,0004 mol zu 1 mol, besonders bevorzugt 3,7 zu 1 bis 0,4 zu 1.

Bevorzugt kann die Phosphinatquelle in Mischung mit Lösungsmittel (Wasser), Selektivitätslenker oder Initiator verwendet bzw. dosiert werden.

Geeignete Olefine sind längerkettig oder cyclisch, flüssig bei Raumtemperatur (20 bis 25 °C) und wenig löslich in Wasser. Bevorzugt beträgt die Löslichkeit weniger als 1 g/l bei 20 °C.

Bevorzugte Hexene sind z. B. Hex-1-en, Hex-2-en, Hex-3-en, 2-Methylpent-1-en, 2-Methylpent-2-en, 2-Methylpent-3-en, 2-Methylpent-1-en, 3-Methylpent-1-en, 3-Methylpent-2-en, 3-Methylpent-3-en, 1,1-Dimethylbut-3-en, 1,3-But-1-en, 1,3-But-3-en.

Bevorzugte Trimethylhexene sind z. B. 4,5,5-Trimethyl-2-hexen, (Z)-2,2,4-Trimethyl-3-hexen, 3,5,5-Trimethyl-1-hexen, 4,5,5-Trimethyl-2-hexen, 3,4,5-Trimethyl-1-hexen, 2,2,5-Trimethyl-3-hexen, 2,4,4-Trimethyl-2-hexen, 4,4,5-Trimethyl-2-hexen, 3,3,4-Trimethyl-1-hexen, 2,2,4-Trimethyl-3-hexen, 3,4,4-Trimethyl-2-hexen, 3,4,4-Trimethyl-1-hexen, 4,5,5-Trimethyl-2-hexen, 2,2,3-Trimethyl-3-hexen, 3,5,5-Trimethyl-(3R)-1-hexen, (Z)-2,2,5-Trimethyl-3-hexen, 2,4,4-Trimethyl-1-hexen, 3,4,5-Trimethyl-2-hexen, Trimethyl-hexen, 2,3,3-Trimethyl-1-hexen, (R*,S*)-3,4,5-Trimethyl-1-hexen, (Z)-4,5,5-Trimethyl-2-hexen, (R*,R*)-3,4,5-Trimethyl-1-hexen, (3E)-2,3,5-Trimethyl-3-hexen, Trimethyl-1-hexen, 2,5,5-Trimethyl-2-hexen, (3Z)-2,3,5-Trimethyl-3-hexen, (3E)-2,2,5-Trimethyl-3-hexen, 2,4,5-Trimethyl-2-hexen, 2,3,5-Trimethyl-3-hexen, (Z)-3,5,5-Trimethyl-2-hexen, 2,3,5-Trimethyl-2-hexen, Trimethyl-2-hexen, (E)-3,5,5-Trimethyl-2-hexen, 3,5,5-Trimethyl-2-hexen, 2,3,3-Trimethylhexen, 3,3,4-Trimethylhexen, 2,3,4-Trimethyl-2-hexen, 2,3,5-Trimethylhexen, 2,3,4-Trimethylhexen, (E)-2,3,4-Trimethyl-3-hexen, 2,2,4-Trimethylhexen, 4,4,5-Trimethyl-1-hexen, (Z)-2,3,4-Trimethyl-3-hexen, 2,2,5-Trimethylhexen, 2,5,5-Trimethyl-1-hexen, 4,5,5-Trimethyl-1-hexen, 2,4,5-Trimethyl-1-hexen, (E)-2,2,4-Trimethyl-3-hexen und / oder 3,3,5-Trimethyl-1-hexen.

Bevorzugte Methylhexadiene sind z. B. Methyl-1,3-hexadien, (E)-2-Methyl-1,4-hexadien, (S)-4-Methyl-2,3-hexadien, 3-Methyl-1,3-hexadien, (R)-4-Methyl-2,3-hexadien, (E)-2-Methyl-1,3-hexadien, (Z,Z)-3-Methyl-2,4-hexadien, Methyl-1,4-hexadien, (3S)-3-Methyl-1,4-hexadien, (4E)-2-Methyl-2,4-hexadien, 3-Methyl-1,4-hexadien, (E)-3-Methyl-1,4-hexadien, 5-Methyl-1,3-hexadien, 4-Methyl-1,2-hexadien, 3-Methyl-1,2-hexadien, 2(or 3)-Methyl-2,4-hexadien, (Z)-5-Methyl-1,4-hexadien, (3E)-3-Methyl-1,3-hexadien, (Z)-4-Methyl-1,3-hexadien, (2E,4Z)-3-Methyl-2,4-hexadien, 3-Methylhexadiene, (3Z)-3-Methyl-1,3-hexadien, (4Z)-2-Methyl-2,4-hexadien, 4-Methyl-1,4-hexadien, 2-Methyl-1,3-hexadien, 2-Methyl-1,5-hexadien, (3Z)-5-Methyl-1,3-hexadien, 4-Methylene-2-hexadien, (Z)-3-Methyl-1,4-hexadien, [S-(E)]-3-Methyl-1,4-hexadien, (3E)-4-Methyl-1,3-hexadien, 4(or 5)-Methyl-1,4-hexadien, 2-Methyl-2,4-hexadien, 4-Methylene-1-hexadien, (3E)-5-Methyl-1,3-hexadien, 2-Methyl-1,4-hexadien;

Bevorzugte Methylcyclohexene sind z. B. 1-Methylcyclohex-2-en, 1-Methylcyclohex-1-en.

Bevorzugte Dimethylcyclohexene sind z.B. Dimethylcyclohex-1-en, 1.3-Dimethylcyclohexen-(4), 1,2-Dimethylcyclohexen-(1), 1,3-Dimethy-cyclohex-1-en, 1,4-Dimethylcyclohex-1-en, 1,2-Dimethylcyclohex-4-en, (1S,2S)-1,2-Dimethylcyclohex-4-en, 1,6-Dimethylcyclohex-1-en, 1.3-Dimethylcyclohexen-(3), 4,4-Dimethylcyclohexene, cis-3,5-Dimethylcyclohexen, trans-3,5-Dimethylcyclohexen, trans-1,2-Dimethylcyclohex-4-en, 3,3-Dimethylcyclohexen-(1), cis-1,2-Dimethylcyclohex-4-en, (3S,5R)-3,5-Dimethylcyclohexen, (3S,5S)-3,5-Dimethylcyclohexene, 2,3-Dimethylcyclohexen, (3R,6R)-trans-3,6-Dimethylcyclohexen, cis-3,6-Dimethylcyclohexene, 3r.4c-Dimethylcyclohexen-(1), 3r.4t-Dimethylcyclohexen-(1), 1,3-Dimethylcyclohex-1-ene, trans-1,2-Dimethylcyclohex-4-en, 1,3-Dimethylcyclohexen-(3), 3,6-Dimethylcyclohexen, trans-3.6-Dimethylcyclohexen, cis-3,4-Dimethylcyclohex-1-en, cis- bzw trans-3,5-Dimethylcyclohexen, cis-3,5-Dimethylcyclohexen-(1), (S)-1,6-Dimethyl-1-cyclohexene, trans-3,4-Dimethylcyclohexene, 3,(4R)-Dimethylcyclohexen, (3S,4R)-3,4-Dimethylcyclohexen, 3,4-Dimethylcyclohexen.

Bevorzugte Methyl-1,3-cyclohexadiene sind z. B. 1-Methyl-2,4-cyclohexadien, 1-Methyl-1,3-cyclohexadien, 2-Methyl-1,3-cyclohexadien; Bevorzugte Dimethyl-1,3-Cyclohexadien sind z. B.1,6-Dimethyl-1,3-cyclohexadien, 1,3-Dimethyl-1,3-cyclohexadien, 2,6-Dimethyl-1,3-cyclohexadien, 5,5-Dimethyl-1,3-cyclohexadien, 5,6-Dimethyl-1,3-cyclohexadien, cis-5,6-Dimethyl-1,3-cyclohexadien, 2,5-Dimethyl-1,3-cyclohexadien, (S)-2,5-Dimethyl-1,3-cyclohexadien, 1,5-Dimethyl-1,3-cyclohexadiene, 1,4-Dimethyl-1,3-cyclohexadien, trans- 5,6-Dimethyl-1,3-cyclohexadien, 2,3-Dimethyl-1,3-cyclohexadien.

Bevorzugte Trimethyl-1,3-cyclohexadien sind z. B.1,6,6-Trimethyl-1,3-cyclohexadien, 1,2,3-Trimethyl-1,3-cyclohexadien, 2,5,5-Trimethyl-1,3-cyclohexadien, 2,6,6-Trimethyl-1,3-cyclohexadien, 5,5,6-Trimethyl-1,3-cyclohexadien, 1,5,5-Trimethyl-1,3-cyclohexadien, 1,2,4-Trimethyl-1,3-cyclohexadien, 1,3,6-Trimethyl-1,3-cyclohexadien, 1,3,5-Trimethyl-1,3-cyclohexadien, 1,6,6-Trimethyl-1,4-cyclohexadien, 1,3,3-Trimethyl-1,4-cyclohexadien, 1,2,4-Trimethyl-1,4-cyclohexadien, 3,3,6-Trimethyl-1,4-cyclohexadien, 1,3,5-Trimethyl-1,4-cyclohexadien.

Bevorzugte Methyl-1,4-cyclohexadien, sind z. B. 2-Methyl-1,3-cyclohexadien, 1-Methyl-1,4-cyclohexadien.

Bevorzugte Dimethyl-1,4-cyclohexadien, sind z. B. Dimethyl-1,4-cyclohexadien, 1,3-Dimethyl-1,4-cyclohexadien, cis-3,6-Dimethyl-1,4-cyclohexadien, 1,4-Dimethyl-1,4-cyclohexadien, trans-3,6-Dimethyl-1,4-cyclohexadien, 1,5-Dimethyl-1,4-cyclohexadien, 1,2-Dimethyl-1,4-cyclohexadien, 1,6-Dimethyl-1,4-cyclohexadien, 3,6-Dimethyl-1,4-cyclohexadien.

Bevorzugt können die erfindungsgemäß eingesetzten Olefine aus Precursorsubstanzen hergestellt werden, die z. B. tert-Butanol, Cyclohexanol sein können. Die Herstellung durch Dehydratisierung kann ohne oder vorzugsweise mit Katalysatoren erfolgen, die z. B. aliphatische oder aromatische Sulfonsäuren sein können, z. B. Benzolsulfonsäure oder Toluolsulfonsäure, Dodecylbenzolsulfonsäure, Schwefelsäure und Schwefelsäurehalbester wie Alkylschwefelsäure, Phosphorsäure oder deren partiell veresterte Derivate oder Borsäure und deren saure Derivate. Bevorzugt sind Säureanhydride wie Phosphorpentoxid, Schwefeldioxid und Boroxid, Aluminiumoxid, Aluminiumphosphat, Borphosphat, Aluminiumsilikat, Kieselgel, Titanoxid, Heteropolysäuren des Phosphors und molybdän- und Wolframsäure. Bevorzugt können erfindungsgemäße Olefine aus Precursorsubstanzen hergestellt werden bei Temperaturen von 50 bis 600 °C, 150 bis 350 °C. Bevorzugt können die Olefine in Mischung mit Selektivitätslenkern oder Initiator verwendet bzw. dosiert werden.

Additive können Co-Lösungsmittel, Emulgatoren, Dispergatoren und/oder Tenside sein.

Bevorzugte Co-Lösungsmittel sind Alkohole, wie z. B. Methanol, Ethanol, Iso-Propanol, n-Propanol, n-Butanol, Iso-Butanol, t-Butanol, n-Amylalkohol, Iso-Amylalkohol, t-Amylalkohol, n-Hexanol, n-Octanol, Iso-Octanol, n-Tridecanol, Benzylalkohol, Cyclohexanol etc. Bevorzugt sind weiterhin Glycole wie z. B. Ethylenglycol, 1,2-Propandiol, 1,3-Propandiol, 1,3-Butandiol, 1,4-Butandiol, Diethylenglycol, Polyethylenglycole, deren Ether und/oder Benzoesäure etc. Bevorzugt bildet sich das Co-Lösungsmittel aus dem Radikalinitiator.

Bevorzugte Emulgatoren sind beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, z. B. Kalium- und Natriumstearat, Natriumlaurylsulfat, Kaliumoleate, Natriumdodecylbenzolsulfonat, Natriumrosinat, Natriumlaurat, Sulfosuccinate, Ethersulfonate, Harzseifen; Kationische Tenside wie z. B. Cetyltrimethylammoniumbromid und Dodecylaminchlorid; nichtionische Tenside wie z. B. Nonylpolyoxyethylenether und Octylphenylpolyoxyethylenether etc. Diese Emulgierungshilfsmittel können allein oder in Mischung miteinander eingesetzt werden.

Erfindungsgemäß werden 0,01 bis 10 Gew.-% Emulgator, bezogen auf die eingesetzte Phosphormenge, bevorzugt 0,1 bis 1 Gew.-% Emulgator, eingesetzt.

Bevorzugte Dispergiermittel sind Alkalimetallsalze der Schwefelsäurehalbester von gesättigten und ungesättigten Fettalkoholen (C₁₂bis C₂₀), Alkalimetallsalze von Alkylsulfonsäuren (C₁₂ bis C₁₈), von Schwefelsäurehalbestern ethoxylierter Alkylphenole (EO-Grad: 3 bis 30, Alkylrest: C₈ bis C₁₀) sowie ethoxylierte Fettalkohole (EO-Grad: 5 bis 50, Alkylrest: C₈ bis C₂₅) und ethoxylierte Alkylphenole (EO-Grad: 3 bis 30, Alkylrest: C₈ bis C₁₀).

Bevorzugte Tenside sind z. B. Alkylalkoxylate (Fettalkoholethoxylate), Alkypolyglycoside und anionische Tenside.

Bevorzugte anionische Tenside vom Sulfonat-Typ sind (C₉ bis C₁₃)-Alkylbenzolsulfonate, alpha-Olefinsulfonate, Alkansulfonate Fettalkoholsulfate, Fettalkoholethersulfate.

Bevorzugte Polyphosphate sind Dinatriumhydrogendiphosphat, Trinatriumhydrogendiphosphat, Tetranatriumhydrogendiphosphat, Tetrakaliumdiphosphat, Dicalciumdiphosphat, Calciumdihydrogendiphosphat, Pentanatriumtriphosphat und /oder Pentakaliumtriphosphat.

Additive dienen der besseren Abtrennung der erfindungsgemäßen phosphorhaltigen Mischungen. Sie können bevorzugt in Mischung mit Initiator, Selektivitätslenker, Olefin oder Lösungsmittel eingesetzt werden.

### Saure Doppelsalze

Bevorzugte Menge ist 0,1 bis 50 mol-% per mol Phosphor.

Bevorzugt beträgt das mol-Verhältnis von Olefin zu Phosphinatquelle 10 zu 1 bis 2 zu 1.

Bevorzugt beträgt das mol-Verhältnis von Wasser zu Phosphinatquelle 100 zu 1 bis 0,08 zu 1, besonders bevorzugt 10 zu 1 bis 0,3 zu 1.

Bevorzugt beträgt das mol-Verhältnis von Initiator zu Phosphinatquelle 0,01 zu 1 bis 0,5 zu 1, besonders bevorzugt 0,05 zu 1 bis 0,25 zu 1.

Erfindungsgemäß werden 0,001 bis 50 mol-% Radikalinitiator pro Stunde (bezogen auf die Phosphorausgangskomponente) zudosiert.

Bevorzugt beträgt das mol-Verhältnis von Additiv zu Phosphinatquelle 50 zu 1 bis 0,0001 zu 1, besonders bevorzugt 20 zu 1 bis 0,001 zu 1.

Bevorzugte Lösungsmittel sind erfindungsgemäße Olefine oder deren Precursoren, Wasser, Alkohole, wie z. B. Methanol, n-Propylalkohol, iso-Propylalkohol, n-Butanol, Iso-Butanol, Amylalkohol etc. Bevorzugt sind weiterhin aliphatische Kohlenwasserstoffe wie Hexan, Heptan, Octan, und Petrolether;
Aromatische Kohlenwasserstoffe wie Benzol, Toluol, Xylol, Ethylbenzol, Diethylbenzol und Chlorobenzol; Halogenkohlenwasserstoffe wie Methylenchlorid, Chloroform, 1,2-Dichloroethan, Chlorobenzol, etc. Tetrachlorkohlenstoff, Tetrabromoethylen;
Alicyclische Kohlenwasserstoffe wie Cyclopentan, Cyclohexan, und Methylcyclohexan; Ketone wie Diisobutylketon und Methyl n-propylketon; Ester wie n-Propylacetat und n-Butylacetat etc. Eine oder mehrere dieser Verbindungen können allein oder in Kombination eingesetzt werden.

Besonders bevorzugt ist die Verwendung von Wasser als Lösungs- bzw. Dispergiermittel. Werden beispielsweise Alkohole wie Butanol etc. als Lösevermittler bzw. Dispergierhilfsmittel eingesetzt, dann im Unterschuss, d. h. unter 50 % Anteil.

Grundsätzlich sind als Radikalinitiatoren alle Systeme geeignet, die freie Radikale generieren. Die Addition des Olefins kann durch einen anionischen Initiator, radikalischen Initiator oder photochemisch initiiert werden.

Bevorzugt sind wasserlösliche Radialinitiatoren.

Bevorzugt sind als Radikalinitiatoren Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid, Perameisensäure, Peressigsäure, 2,4-Dichlorobenzoylperoxid, Decanoylperoxid.

Besonders bevorzugt sind als Radikalinitiatoren-Verbindungen, die im Lösemittelsystem Peroxide bilden können wie Natriumperoxid, Natriumperoxidediperoxohydrat, Natriumperoxiddiperoxohydrathydrat, Natriumperoxidedihydrat, Natriumperoxidoctahydrat, Lithiumperoxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborattrihydrat, Natriumperoxoboratmonohydrat, wasserfreies Natriumperoxoborat, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Selektivitätslenker dienen dazu die Zusammensetzung der erfindungsgemäßen Mischungen richtig einzustellen. Durch falsche Wahl der Edukte können generell zu hohe Nebenproduktgehalte entstehen (Oxidationsreaktionen). Diese können bei der Herstellung der Polymerformmassen und Polymerformkörper Nebeneffekte ergeben, wie z. B. Phosphinfreisetzung.

Bevorzugt werden als Selektivitätslenker Übergangsmetallionen in Mengen von 0,1 bis 1.000 ppm eingesetzt. Bevorzugte Ionen stammen vom Mangan, Silber, Platin, Nickel, Chrom, Palladium, Kupfer, Vanadium, Molybdän, Kobalt oder Eisen ab.

Vorzugsweise werden diese Übergangsmetallionen als Salze organischer Säuren eingesetzt, wobei geeignete organische Säuren in diesem Zusammenhang 2 bis 20 Kohlenstoffatome enthalten und ausgewählt sind aus der Gruppe Essigsäure, Propionsäure, 2-Ethylhexansäure, Hexansäure, Octansäure, Ölsäure, Oleinsäure, Palmitinsäure, Stearinsäure, Naphtalinsäure. Weiterhin sind Komplexe derartiger Salze mit Acetoaceton geeignet. (EP-A-1 622 945).

Bevorzugt sind Elemente der VIII. Nebengruppe des Periodensystems der Elemente. Besonders bevorzugt ist Eisen, in zweiwertiger und dreiwertiger Form.

Bevorzugt sind Eisenphosphit, Eisenhypophosphit, Eisen(III)chlorid, Eisen(II)oxid, Eisen(II,III)oxid, Eisen(III)oxid, Eisen(II)hydroxid, Eisen(II)sulfathydrat, Eisen(II)sulfatheptahydrat, Eisen(III)hydroxid, Eisen(II)titanat, Eisen(II)phosphat, Eisen(III)phosphat, Eisen(III)phosphatdihydrat, Eisen(III)phosphattetrahydrat, Eisen(III)pyrophosphat, metallisches Eisen.

Bevorzugt ist das Verhältnis von Eisen zu P-Quelle 1 mol Fe zu 62.500 mol P bis 1 mol Fe zu 3*10⁷ mol P

Bevorzugt sind Elemente der II. Hauptgruppe des Periodensystems der Elemente. Besonders bevorzugt ist Calcium.

Bevorzugt sind Calciumhypophosphit, Calciumcarbonat, Calciumhydrogencarbonat, Calciumchlorid, Calciumchloriddihydrat, Calciumchloridhexahydrat, Calciumphosphat, Dicalciumphosphat, Tricalciumphosphat, Monocalciumphosphat, tribasisches Calciumphosphat, dibasisches Calciumphosphatdihydrat, monobasisches Calciumphosphathydrat, Calciumfluorophosphat, Calciumhydroxid, Calciumoxid, Calciumoxalat, Calciumpyrophosphat, Calciumsulfat, Calciumsulfathemihydrat, Calciumsulfatdihydrat, Calciumtitanat, Calciumpyrophosphat, Calciumpolyphosphat, Calciumsuperphosphat oder Calciumhydrogenphosphat.

Bevorzugt ist das Verhältnis von Calcium zu P-Quelle 1 mol Ca zu 192 mol P bis 1 mol Ca zu 57.600 mol P, besonders bevorzugt 1 mol Ca zu 1.920 mol P bis 1 mol Ca zu 23.040 mol P.

Als Selektivitätslenker bevorzugt sind gehinderte Phenole wie 2,6-Di-tert.-Butyl-4-methylphenol (BHT). Bevorzugt sind 2-tert.-Butyl-4-methylphenol, 2,5-Di-tert.-Butyl-4-methoxyphenol, 2,6-Di-tert.-Butyl-4-methoxyphenol, 2-tert.-Butyl-5-methylphenol, 2-tert.-Butyl-6-methylphenol, 2,6-di-tert-butyl-4-methylphenol, 2,4-dimethyl-6-tert-butylphenol, 2,4-dimethyl-6-tert-butylphenol, 2,4-dimethyl-6-tert-butylphenol und 2,6-di-tert-butyl-4-methylphenol, 2,6-di-tert-butylphenol, 2,2-Methylenbis-(4methyl-6-tert.-butylphenol), 2-butyl-4,6-dimethylphenol ; 2,6-di-tert-butyl-4-n-butylphenol ; 2,6-di-tert-butyl-4-isobutylphenol ; 2,6-dicyclopentyl-4-methylphenol ; 2,6-dioctadecyl-4-methylphenol ; 2,4,6-tricyclohexylphenol ; 2,6-di-tert-butyl-4-methoxymethylphenol, 2,4-Di-tert.-butylbrenzcatechin, tert.-Butylbrenzcatechin, 2,2'-Methylenbis(4-methyl-6-tert-butylphenol), 4,4'-Methylenbis(2,6-di-tert-butylphenol),4,4'-Thiobis(2-tert-butyl-5-5-methylphenol. Bevorzugte gehinderte Phenole sind veresterte gehinderete Phenol wie Pentaerythrittetrakis [3-(3,5-di-t-butyl-4-hydroxyphenyl)propionat].

Geeignet sind auch alkylierte Monophenole, 2,6-Di -tert-butyl-4-ethylphenol, 2,6-Di-octadecyl-4-methylphenol, 2,6-Di-nonyl-4-methylphenol, 2,4-Dimethyl-6-(1'-methyl-undec-I'-yl)-phenol, 2,4-Dimethyl-6-(1'-methyl-heptadecyl-phenol, 2,4-Dimethyl-6-(1'-methyl-tridecyl)-phenol und Mischungen davon.

Besonders bevorzugt sind Hydrochinone, alkylierte Hydrochinone und Hydrochinonmonomethylether sind Monomethylether-Hydrochinon (4-Methoxyphenol, MEHQ), Hydroxychinondimethylether, 4-Phenoxyphenol, Hydrochinon, 2,6-Di-tert-butyl-4-methoxyphenol, 2,5-Di-tert-butyl-hydrochinon, 2,5-Dl-tert-amyl-hydrochinon, 2,6-Diphenyl-4-octa-decyloxyphenol, 2,6-Di-tert-butyl-hvdrochinon, 2,5-Di-tertbutyl-4-hydroxyanisol, 3,5-Di-tert-butyl-4-hydroxyanisol, 3,5-Di-lert-butyl-4-hydroxyphenyl-stearat, Bis-(3,5-di-tert-butyl-4-hydroxyphenyl)adipat.

Besonders bevorzugte Phosphite oder Phosphonite sind Tris-4-tert-butylphenylphosphit, Tris-2,4-di-tert-butylphenylphosphit, Bis(4-tert-butylphenyl)-2,4-di-tert-butylphenylphosphit, Bis(2,4-di-tert-butylphenyl)-4-tert-butylphenylphosphit, Bis(2,4-di-tert-butyl-6-methylphenylpentaerythritdiphosphit), Tris-4-tert-pentylphenylphosphit, Tris-2,4-di-tert-pentylphenylphosphit, Bis(4-tert-pentylphenyl)-2,4-di-tert-pentylphenylphosphit und Bis(2,4-di-tert-pentylphenyl)-4-tert-pentylphenylphosphit, Tris(nonylphenyl)phosphit.

Bevorzugte Phosphite sind Trilauryl-, Tributyl-, Trioctyl-, Tridecyl-, Tridodecyl-, triphenyl-, Octyldiphenyl-, Dioctylphenyl-, Tri-(octylphenyl)-, Tribenzyl-, Butyldicresyl-, Octyl-di(octylphenyl)-, Tris-(2-ethylhexyl)-, Tritolyl-, Tris-(2-cyclohexylphenyl)-, Tri-[alpha]-naphthyl-, Tris-(phenylphenyl)-, Tris-(2-phenylethyl)-, Tris-(dimethylphenyl)-, Tricresyl- oder Tris-(nonylphenyl)phosphit, Triphenylphosphit, Diphenyldecylphosphit, Didecylphenylphosphit oder Tristearylsorbittriphosphit oder Tetradodecyldipropyleneglycoldiphosphit oder Tetradecylpentaerythritoldiphosphite, Tetradodecylpentaerythritoldiphosphit, Düsodecylpentaerythritoldiphosphit ; 2,2-Methylen-bis(4,6-di-tert-butylphenyl)octylphosphit; Bis(2,4-di-tert-butylphenyl)pentaerythritoldiphosphite ; (2,6-Di-tert-butyl-4-methylphenyl)pentaerythritoldiphosphit ; Isodecyloxypentaerythritoldiphosphit; Bis(2,4-di-tert-butyl-6-methylphenyl) pentaerythritoldiphosphit ; Bis(2,4,6-tri-tert-butylphenyl)pentaerythritoldiphosphit ; Tristearylsorbitoltriphosphit ; Trioctadecylphosphit ; Distearylpentaerythritoldiphosphit ; Tetrakis(2,4-di-tert-butylphenyl)-4,4'-biphenylenediphosphonit.

Phosphite und Phosphonite, wie z. B. Tris-(nonylphenyl)-phosphit, Trilaurylphosphit, Triocta-decylphosphit, Tris-(2,4-di-tert-butylphenyl)-phosphit, Diisodecylpentaerythrit-diphosphit, Bis-(2,4-di-tert-butylphenyl)-penta-erythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, 6-lsooctyloxy-2,4,8,10-tetratert-butyl-12H-dibenz[d,g]-1,3,2-dioxaphosphocin, 6-Fluor-2,4,8,10-tetra-tertbutyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methyl-phenyl)-ethylphosphit.

Bevorzugt sind Triphenylphosphat ; Diphenylalkylphosphat ; Phenyldialkylphosphat ; Tris(nonylphenyl) phosphat; Trilaurylphosphat ; Tris(2,4-di-tert-butylphenyl)phosphat; 6-Isooctyloxy-2,4,8,10-tetra-tert-butyl-12-H-dibenzo[d,g]-1,3,2-dioxaphosphocin ; 6-Fluoro-2,4,8,10-tetra-tert-butyl-1-2-methyldibenzo[d,g]-1,3,2-dioxaphosphocin ; (2,4-Di-tert-butyl-6-methylphenyl)methylphosphat ; (2,4-di-tert-butyl-6-methylphenyl)ethylphosphate

Besonders bevorzugte sterisch gehinderte Amine sind sterisch gehinderte Amin-Lichtstabilisatoren (HALS).

Sterisch gehinderte Amine, wie z. B. Bis-(2,2,6,6-tetramethyl-piperidyl)-sebacat, Bis-(2,2,6,6-tetramethylpiperidyl)-succinat, Bis-(1,2,2,6,6-pentamethylpiperidyl)-sebacat, n-Butyl-3,5-di-tert-butyl-4-hydroxybenzylmalonsäure-bis(1,2,2,6,6-pentamethyl-piperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetra-methylpiperazinon), 4-Benzoyl-2,2,6,6-tetramethylpiperidin, 4-Stearyloxy-2,2,6,6 tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5)decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)ethan, Kondensationsprodukt aus 2-Chlor-4,6-di-(4-n-butylamino-1 ,2,2,6,6-pentamethylpiperidyl)-1,3,5-triazin und 1,2-Bis-(3-aminopropylamino)-ethan, 8-Acetyl-3-dodecyl-7,7,9,9-tetramethyl-1,3,8-triazaspiro[4.5]decan-2,4-dion, 3-Dodecy)-1 -(2,2,6,6-tetramethy)-4-piperidyt)pyrrotidin-2,5-dion, 3-Dodecyl-1-(1,2,2,6,6-pentamethyl-4-piperidyl)-pyrrolidin-2,5-dion.

Bevorzugte aromatische Amine sind p-Phenylendiamine wie Dioctyldiphenyldiamin, Dinonyldiphenyldiamin, Phenyl-alpha-naphthylamin, N,N'-di-2-butyl-1,4-phenylenediamin,N,N-Dibutyl-p-phenylendiamin.

Bevorzugte Phenothiazine sind unsubstitutiertes Phenothiazin und unsubstitutiertes Phenothiazin-5-oxid oder seine Hydrohalogenide, bevorzugter Weise dessen Hydrochloride.

Typische Substituenten von substitutierten Phenothiazinen sind Alkylgruppen, Alkoxygruppen, Arylgruppen, Carboxylgruppen, Carbonsäureestergruppen, Carbonsäureamidgruppen, Halogenatome, Hydroxylgruppen, Nitrogruppen oder Kombinationen davon.

Bevorzugt sind Phenothiazin, 3-Phenylphenothiazin, N-Phenylphenothiazin, Phenothiazin-5-oxid, 10,10'-Diphenylphenothiazin, N-Benzoylphenothiazin, 7-Benzoylphenothiazin, 3,7-Difluorophenothiazin, N-Ethylphenothiazin, 2-Acetylphenothiazin, 3,7-Dioctylphenothiazin, N-Methylphenothiazine-5-oxid, N-Acetylphenothiazin, N-(2-Diethylaminoethyl)-phenothiazin, N-(2-Dimethylaminopropyl)-phenothiazin, N-(2-Dimethylaminopropylphenothiazin)-hydrochloride, N-Octadecylphenothiazin und N-Propylphenothiazin.

Bevorzugte Organoschwefelverbindungen sind hydroxylierte Thiodiphenylether wie z. B. 2,2'-Thio-bis-(6-t-butyl-4-methylphenol); 2,2'-Thio-bis-(4-octylphenol); 4,4'-Thio-bis-(6-t-butyl-3- methylphenol); 2-Methyl-4-isothiazolin-3-on, Laurylthiopropionat, Salze von Dialkyldithiocarbaminsäure.

Bevorzugt ist das Verhältnis von Stabilisator zu P-Quelle 1 mol zu 13 mol P bis 1 mol zu 1.341.500 mol P besonders bevorzugt 1 mol zu 134 mol P bis 1 mol zu 13.415 mol P.

Bevorzugt enthält das phosphorhaltige Flammschutzmittel 70 bis 99,9 Gew.-% erfindungsgemäße phosphorhaltige Mischung und 0,1 bis 30 Gew.-% eines oder mehrere Polymeradditive.

Bevorzugt weist das phosphorhaltige Flammschutzmittel eine mittlereTeilchengröße von 0,1 bis 1.700 µm und eine verbleibende Feuchte von 0,01 bis 9 Gew.-% auf.

Die verbleibende Feuchte der erfindungsgemäßen phosphorhaltigen Mischung beträgt 0,01 bis 9 %, bevorzugt 0,05 bis 0,5 %.

Die Erfindung betrifft auch Polymerformmassen, enthaltend
1 bis 40 Gew.-% der erfindungsgemäßen phosphorhaltigen Mischung
1 bis 99 Gew.-% Polymer oder Mischungen derselben
0 bis 60 Gew.-% Polymeradditive
0 bis 60 Gew.-% Füllstoff.

Bevorzugte Polymer-Additive für flammgeschützte Polymerformmassen und flammgeschützte Polymer-Formkörper sind UV-Absorber, Lichtschutzmittel, Gleitmittel, Farbmittel, Antistatika, Nukleierungsmittel, Füllstoffe und/oder Synergisten.

Die Erfindung betrifft auch Polymerformkörper, -Filme, -Fäden und -Fasern, enthaltend
1 bis 40 Gew.-% der erfindungsgemäßen phosphorhaltigen Mischung 1 bis 99 Gew.-% Polymer oder Mischungen derselben
0 bis 60 Gew.-% Polymeradditive
0 bis 60 Gew.-% Füllstoff.

Die Erfindung betrifft auch Polymerformkörper, -Filme, -Fäden und -Fasern, enthaltend
1 bis 50 Gew.-% der erfindungsgemäßen phosphorhaltigen Mischung
1 bis 99 Gew.-% polystyrolbasierendes Polymer oder Mischungen derselben
0 bis 60 Gew.-% Polymeradditive
0 bis 60 Gew.-% Füllstoff.

Erfindungsgemäß bevorzugt ist die Anwendung der erfindungsgemäßen flammgeschützten Polymer-Formkörper als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Die Erfindung betrifft auch eine Intumeszenz-Flammschutz-Beschichtung enthaltend 1 bis 50 % der erfindungsgemäßen phosphorhaltigen Mischung, 0 bis 60 % Ammoniumpolyphosphat sowie 0 bis 80 Gew.-% Bindemittel, Schaumbildner, Füllstoffe und Polymeradditive.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-Methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol 143E (BASF), Poly-(p-Methylstyrol), Poly-( alpha -Methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur (BASF). Bevorzugt sind Polystyrolschaumstoffe wie z. B. Austrotherm XPS, Styrofoam (Dow Chemical), Floormate, Jackodur, Lustron, Roofmate, Styropor, Styrodur, Styrofoam, Sagex und Telgopor.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte PolyMethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie PolyoxyMethylen, sowie solche PolyoxyMethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie

Polyamid 2/12,
- Polyamid 4: (Poly-4-aminobuttersäure, Nylon 4, Fa. DuPont),
- Polyamid 4/6: (Poly(tetraMethylen-adipamid), Poly-(tetraMethylenadipinsäurediamid), Nylon 4/6, Fa. DuPont),
- Polyamid 6: (Polycaprolactam, Poly-6-aminohexansäure, Nylon 6, Fa. DuPont, Akulon K122, Fa. DSM; Zytel 7301, Fa. DuPont; Durethan B 29, Fa. Bayer),
- Polyamid 6/6: ((Poly(N,N'-hexaMethyleneadipinediamid), Nylon 6/6 , Fa. DuPont, Zytel 101, Fa. DuPont; Durethan A30, Durethan AKV, Durethan AM, Fa. Bayer; Ultramid A3, Fa BASF),
- Polyamid 6/9: (Poly(hexaMethylen nonanediamid), Nylon 6/9, Fa. DuPont),
- Polyamid 6/10: (Poly(hexaMethylen sebacamid), Nylon 6/10 , Fa. DuPont),
- Polyamid 6/12: (Poly(hexaMethylene dodecanediamid), Nylon 6/12 , Fa. DuPont),
- Polyamid 6/66: (Poly(hexaMethylene adipamide-co-caprolactam), Nylon 6/66, Fa. DuPont),
- Polyamid 7: (Poly-7-aminoheptansäure, Nylon 7, Fa. DuPont),
- Polyamid 7,7: (PolyheptaMethylenpimelamid, Nylon 7,7, Fa. DuPont),
- Polyamid 8: (Poly-8-aminooctansäure, Nylon 8, Fa. DuPont),
- Polyamid 8,8: (PolyoctaMethylensuberamid, Nylon 8,8, Fa. DuPont),
- Polyamid 9: (Poly-9-aminononansäure, Nylon 9, Fa. DuPont),
- Polyamid 9,9: (PolynonaMethylenazelamid, Nylon 9,9, Fa. DuPont),
- Polyamid 10: (Poly-10-amino-decansäure, Nylon 10, Fa. DuPont),
- Polyamid 10,9: (Poly(decaMethylenazelamid), Nylon 10,9, Fa. DuPont),
- Polyamid 10,10: (PolydecaMethylensebacamid, Nylon 10,10, Fa. DuPont),
- Polyamid 11: (Poly-11-aminoundecansäure, Nylon 11, Fa. DuPont),
- Polyamid 12: (Polylauryllactam, Nylon 12 , Fa. DuPont, Grillamid L20, Fa. Ems Chemie),
aromatische Polyamide ausgehend von m-Xylol, Diamin und Adipinsäure; Polyamide, hergestellt aus HexaMethylendiamin und Iso- und/oder Terephthalsäure (PolyhexaMethylenisophthalamid

PolyhexaMethylenterephthalamid) und gegebenenfalls einem Elastomer als Modifikator, z. B. Poly-2,4,4-triMethylhexaMethylenterephthatamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder PolytetraMethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex 2500, Celanex 2002, Fa Celanese; Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Erfindungsgemäß zur Herstellung von Polymerformmassen einsetzbare Compoundieraggregate sind Einwellenextruder bzw. Einschneckenextruder z. B. der Fa. Berstorff GmbH, Hannover und oder der Fa. Leistritz, Nürnberg.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z. B. von Fa. Coperion Buss Compounding Systems, CH-Pratteln, z. B. MDK/E46-11D und/oder Laborkneter (MDK 46 der Fa. Buss, Schweiz mit L = 11 D).

Erfindungsgemäß einsetzbare Compoundieraggregate sind Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z. B. Compex 37- bzw. 70-Typen der Fa. Krauss-Maffei Berstorff.

Erfindungsgemäße wirksame Schnecken längen sind bei Einwellenextrudern bzw. Einschneckenextrudern 20 bis 40D.

Erfindungsgemäße wirksame Schneckenlängen (L) bei Mehrzonenschneckenextudern sind z. B. 25D mit Einzugzone (L = 10D), Übergangszone (L = 6D), Ausstoßzone (L = 9D).

Erfindungsgemäßen wirksame Schneckenlängen bei Doppelschneckenextrudern sind 8 bis 48D.

### Herstellung, Verarbeitung und Prüfung von flammgeschützten Kunststoffformmassen und Kunststoff-Formkörpern

Die Flammschutzkomponenten wurden mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
V-2 Zündung der Watte durch brennendes Abtropfen, übrige Kriterien wie bei V-1.

Nicht klassifizierbar (nkl) erfüllt nicht die Brandklasse V-2.

### Beispiel 1

1 mol Natriumhypophosphitmonohydrat, 2,5 mol Cyclohexen und 0,5 mol H₂SO₄ 96 % werden gemischt und etwas Wasser werden am Wasserabscheider abdestilliert. Der Feststoff wird abfiltriert und zweimal mit Cyclohexen gewaschen. Die Ausbeute an Hypophosphriger Säure ist 95 %. Die erhaltene Emulsion wird bei 83 °C am Rückfluss über 6 h mit insgesamt 61g Bisbenzoylperoxid versetzt. Die Mischung enthält 0,2 ppm Eisen als Eisen(II)sulfat. Die Reaktionslösung wird demineralisiertem (demin.) Wasser extrahiert, bis zur Sättigung eingedampft und Feststoff auskristallisiert. Nach Trocknen bei 20 mbar und 130 °C werden 178 g Produkt erhalten (83 % Ausbeute, bezogen auf eingesetzte H₃PO₂). Das Produkt setzt sich zusammen aus
99,5 mol-% Verbindung der Formel (1) worin R¹ = R² = Cyclohexyl,
0,1 mol-% Verbindung der Formel (1) worin R¹ = H und R² = Cyclohexyl,
0,2 mol-% Verbindung der Formel (1) worin R¹ = OH und R² = Cyclohexyl
0,1 mol-% Verbindung der Formel (1) worin R¹ = OH und R² = H
0,1 mol-% Verbindung der Formel (1) worin R¹ = R² = H ist.

### Beispiel 2

1 mol H₃PO₂ (50 % in H₂O) werden mit 2 mol Cyclohexen vorgelegt. Wasser wird am Wasserabscheider bei 83 °C azeotrop abdestilliert. 65 g Bisbenzoylperoxid werden in 2 mol Cyclohexen gelöst und über 12 h bei 83 °C zudosiert. Die Mischung enthält 0,3 ppm Calcium als Calciumphosphit und 2,5 ppm 4-Methoxyphenol (MEHQ). Die Reaktionslösung wird mit heißem demin. Wasser extrahiert, bis zur Sättigung eingedampft und Feststoff auskristallisiert. Nach dem Trocknen bei 20 mbar und 130 °C werden 196 g Produkt erhalten (85 % Ausbeute). Das Produkt setzt sich zusammen aus
99,6 mol-% Verbindung der Formei (1) worin R¹ = R² = Cyclohexyl,
0,1 mol% Verbindung der Formel (1) worin R¹ = H und R² = Cyclohexyl,
0,1 mol-% Verbindung der Formel (1) worin R¹ = OH und R² = Cyclohexyl und
0,2 mol-% Verbindung der Formel (1) worin R¹ = OH und R² = H ist.

### Beispiel 3

In einem Autoklav der Fa. Berghof wird 1 mol Natriumhypophosphitmonohydrat, 2,24 mol Cyclohexen, 236 g Methanol und 6,3 g t-Butylperoxid 12 h unter Rühren auf 150 °C erhitzt. In zwei weiteren Schritten werden jeweils weitere 6,3 g t-Butylperoxid zugegeben und 12 h unter Rühren auf 150 °C erhitzt. Die Lösung enthält 1 ppm Eisen als Eisenhypophosphit. Die Reaktionslösung wird zur Trockene eingedampft, dann mit 1 mol 37 %iger Salzsäure und 550 g Eisessig versetzt, der Feststoff abfiltriert, die Lösung eingedampft, mit 900 g Heptan aufgenommen, mit demin. Wasser gewaschen, 700 g Heptan abdestilliert und Feststoff auskristallisiert. Nach Trocknen bei 20 mbar, 130 °C und 15 h werden 205 g Produkt erhalten (89 % Ausbeute). Das Produkt setzt sich zusammen aus 99,9 mol-% Verbindung der Formel (1) worin R¹ = R² = Cyclohexyl und
0,1 mol-% Verbindung der Formel (1) worin R¹ = OH und R² = Cyclohexyl ist.

### Beispiel 4

In einem Autoklav der Fa. Berghof wird 0,1 mol Natriumhypophosphitmonohydrat, 0,3 mol Cyclohexen, 150 g Eisessig und 1,1 g Natriumperoxodisulfat 12 h unter Rühren auf 150 °C erhitzt. Es werden 2 mal je 1,1 g Natriumperoxodisulfat zugegeben und 12 h unter Rühren auf 150 °C erhitzt. Die Lösung enthält 1,7 ppm Calcium als Calciumhypophosphit. Zur Aufarbeitung wird mit 0,1 mol 37 %iger Salzsäure versetzt, Natriumchlorid abfiltriert und zur Trockene eingedampft. Der Rückstand wird in 140 g Heptan gelöst und auskristallisiert. Nach Trocknung bei 20 mbar, 130 °C und 15 h werden 20 g Produkt erhalten (Ausbeute 87 %). Das Produkt setzt sich zusammen aus 99,9 mol-% Verbindung der Formel (1) worin R¹ = R² = Cyclohexyl und
0,1 mol-% Verbindung der Formel (1) worin R¹ = OH und R² = H ist.

### Beispiel 5

In einem Glasautoklav der Fa. Büchi werden 1 mol Natriumhypophosphitmonohydrat, 426 g demin Wasser und 155 g Cyclohexen vorgelegt. Nach Erhitzen auf 118 °C werden über 6,5 h 17 g Natriumperoxodisulfat, die in 226 g Wasser gelöst sind, unter Rühren zudosiert. Die Lösung enthält 9 ppm Calcium als Calciumchlorid. Zur Reaktionslösung wird 0,5 mol 96 %ige Schwefelsäure gegeben. Der ausgefallene Feststoff wird abfiltriert und mit demin. Wasser gewaschen. Nach Trocknen bei 20 mbar, 130 °C und 15 h werden 209 g Produkt erhalten (91 % Ausbeute). Das Produkt setzt sich zusammen aus
99,8 mol-% Verbindung der Formel (1) worin R¹ = R² = Cyclohexyl,
0,1 mol-% Verbindung der Formel (1) worin R¹ = H und R² = Cyclohexyl und
0,1 mol-% Verbindung der Formel (1) worin R¹ = R² = H ist.

### Beispiel 6

In einem Glasautoklav der Fa. Büchi werden 1 mol Natriumhypophosphitmonohydrat, 426 g demin. Wasser und 155 g Cyclohexen vorgelegt. Nach Erhitzen auf 118 °C werden über 6,5 h 30 g Wako^{®} V50, die in 210 g Wasser gelöst sind, unter Rühren zudosiert. Die Lösung enthält 2,6 ppm Phenothiazin. Zur Reaktionslösung werden 1 mol 37 %ige Salzsäure und 680 g Cylcohexen gegeben. Die organische Phase wird mit demin. Wasser extrahiert, danach 450 g Lösungsmittel abdestilliert. Der ausgefallene Feststoff wird abfiltriert. Nach Trocknen bei 20 mbar, 130 °C und 15 h wurden 200 g Produkt erhalten
(87 % Ausbeute). Das Produkt setzt sich zusammen aus
99,7 mol-% Verbindung der Formel (1) worin R¹ = R² = Cyclohexyl,
0,2 mol-% Verbindung der Formel (1) worin R¹ = OH und R² = Cyclohexyl und
0,1 mol-% Verbindung der Formel (1) worin R¹ = R² = H ist.

### Beispiel 7

In einem Glasautoklav der Fa. Büchi werden 1 mol Natriumhypophosphitmonohydrat, 323 g demin Wasser und 155 g Cyclohexen vorgelegt. Nach Erhitzen auf 118 °C werden über 21,3 h 55 g Natriumperoxodisulfat, die in 149 g Wasser gelöst sind, unter Rühren zudosiert. Die Lösung enthält 0,3 ppm Eisen als Eisenhypophosphit, 4 ppm Calcium als Calciumhypophosphit und 0,7 ppm 2,6-Di-tert.-Butyl-4-methylphenol (BHT). Der ausgefallene Feststoff wird abfiltriert und mit demin.Wasser gewaschen. Nach Trocknen bei 20 mbar, 130 °C und 15 h werden 191 g Produkt erhalten (83 % Ausbeute). Das Produkt setzt sich zusammen aus
99,8 mol-% Verbindung der Formel (1) worin R¹ = R² = Cyclohexyl,
0,1 mol-% Verbindung der Formel (1) worin R¹ = OH und R² = Cyclohexyl und
0,1 mol-% Verbindung der Formel (1) worin R¹ = OH und R² = H ist.

### Beispiel 8

In einem Glasautoklav der Fa. Büchi werden 1 mol Natriumhypophosphitmonohydrat, 426 g demin. Wasser 835 g Cyclohexen und 0,5 mol H₂SO₄ vorgelegt. Nach Erhitzen auf 118 °C werden über 4 h 26 g Natriumperoxodisulfat, die in 133 g Wasser gelöst sind, unter Rühren zudosiert. Die Lösung enthält 0,03 ppm Eisen als Eisen(II)chlorid. Die organische Phase wird abgetrennt, dreimal mit 680 g demin. Wasser gewaschen 450 g Lösungsmittel abdestilliert. Der ausgefallene Feststoff wird abfiltriert. Nach Trocknen bei 20 mbar, 130 °C und 15 h werden 191 g Produkt erhalten (83 % Ausbeute). Das Produkt setzt sich zusammen aus
99,7 mol-% Verbindung der Formel (1) worin R¹ = R² = Cyclohexyl,
0,1 mol-% Verbindung der Formel (1) worin R¹ = OH und R² = Cyclohexyl,
0,1 mol-% Verbindung der Formel (1) worin R¹ = OH und R² = H und
0,1 mol-% Verbindung der Formel (1) worin R¹ = H und R² = H ist.

### Beispiel 9

In einem Glasautoklav der Fa. Büchi werden 1 mol Natriumhypophosphitmonohydrat, 426 g demin. Wasser und 835 g Cyclohexen vorgelegt. Nach Erhitzen auf 128 °C werden über 21,3 h 55 g Natriumperoxodisulfat, die in 149 g Wasser gelöst sind, unter Rühren zudosiert. Die Lösung enthält 0,07 ppm Eisen als Eisen(II)hypophosphit und 2 ppm Ca als Calciumhypophosphit. Die organische Phase wird abgetrennt, mit demin. Wasser gewaschen und 450 g Lösungsmittel abdestilliert. Der ausgefallene Feststoff wird abfiltriert. Nach Trocknen bei 20 mbar, 130 °C und 15 h werden 198 g Produkt erhalten (86 % Ausbeute). Das Produkt setzt sich zusammen aus
99,7 mol-% Verbindung der Formel (1) worin R¹ = R² = Cyclohexyl,
0,1 mol-% Verbindung der Formel (1) worin R¹ =H und R² =Cyclohexyl,
0,1 mol-% Verbindung der Formel (1) worin R¹ = OH und R² = Cyclohexyl und
0,1 mol-% Verbindung der Formel (1) worin R¹ = H und R² = H ist.

### Beispiel 10

In einem Glasautoklav der Fa. Büchi werden 1 mol Natriumhypophosphitmonohydrat, 426 g demin Wasser, 0,4 g Tetranatriumpyrophosphat und 155 g Cyclohexen vorgelegt. Nach Erhitzen auf 118 °C werden über 4 h 26 g Natriumperoxodisulfat, die in 133 g Wasser gelöst sind, unter Rühren zudosiert. Die Lösung enthält 25 ppm Calcium als Calciumpyrophosphat. Nachdem die Reaktionslösung wie in Beispiel 6 aufgearbeitet wurden, wurden 195 g Produkt (85 % Ausbeute erhalten). Das Produkt setzt sich zusammen aus
99,8 mol-% Verbindung der Formel (1) worin R¹ = R² = Cyclohexyl,
0,1mol-% Verbindung der Formel (1) worin R¹=H und R² = Cyclohexyl und
0,1mol-% Verbindung der Formel (1) worin R¹ = OH und R² = Cyclohexyl ist.

### Beispiel 11

In einem Glasautoklav der Fa. Büchi werden 1 mol Natriumhypophosphitmonohydrat, 426 g demin Wasser, 1,8 g Natriumstearat und 155 g Cyclohexen vorgelegt. Nach Erhitzen auf 118 °C werden über 4 h 26 g Natriumperoxodisulfat, die in 133 g Wasser gelöst sind, unter Rühren zudosiert. Die Lösung enthält 0,1 ppm Bis(2,4-di-tert-butyl-6-methylphenylpentaerythrit-diphosphit). Nachdem die Reaktionslösung wie in Beispiel 3 aufgearbeitet wurde, wurden 200 g Produkt (87 % Ausbeute erhalten). Das Produkt setzt sich zusammen aus
99,8 mol-% Verbindung der Formel (1) worin R¹ = R² = Cyclohexyl,
0,1mol-% Verbindung der Formel (1) worin R¹ =H und R² = Cyclohexyl und
0,1mol-% Verbindung der Formel (1) worin R¹ = OH und R² = H ist.

### Beispiel 12 (Vergleich)

In einem Glasautoklav der Fa. Büchi werden 1 moi Natriumhypophosphitmonohydrat, 426 g demin Wasser, 2,2 g Natriumdodecylsulfat und 155 g Cyclohexen vorgelegt. Nach Erhitzen auf 118 °C werden über 4 h 26 g Natriumperoxodisulfat, die in 133 g Wasser gelöst sind, unter Rühren zudosiert. Nachdem die Reaktionslösung wie in Beispiel 5 aufgearbeitet wurde, wurden 205 g Produkt (89 % Ausbeute erhalten). Das Produkt setzt sich zusammen aus 100 mol-% Verbindung der Formel (1) worin R¹ = R² = Cyclohexyl ist.

### Beispiel 13

In einem Glasautoklav der Fa. Büchi werden 1 mol Natriumhypophosphitmonohydrat, 426 g demin Wasser 155 g Cyclohexen und 72 g n-Butanol vorgelegt. Nach Erhitzen auf 118 °C werden über 3,5 h 35 g Natriumperoxodisulfat, die in 135 g Wasser gelöst sind, unter Rühren zudosiert. Die Lösung enthält 1,1 ppm Calcium als Calciumhypophosphit. Nachdem die Reaktionslösung wie in Beispiel 3 aufgearbeitet wurde, wurden 205 g Produkt
(89 % Ausbeute erhalten). Das Produkt setzt sich zusammen aus
99,9 mol-% Verbindung der Formel (1) worin R¹ = R² = Cyclohexyl ist
0,1mol-% Verbindung der Formel (1) worin R¹ =H und R² = Cyclohexyl ist.

### Beispiel 14

In einem Autoklav der Fa. Berghof werden 1 mol Natriumhypophosphitmonohydrat, 291 g Cyclohexanol, 30 g 96 %ige Schwefelsäure vorgelegt und 6,3 g t-Butylperoxid 12 h unter Rühren auf 150 °C erhitzt. In zwei weiteren Schritten werden jeweils weitere 6,3 g t-Butylperoxid zugegeben und 12 h unter Rühren auf 150 °C erhitzt. Die Lösung enthält 119 ppm Laurylthiopropionat. Zu der abgekühlten Reaktionslösung werden noch 0,2 mol 96 %ige Schwefelsäure gegeben, der Feststoff abfiltriert. Die Reaktionslösung wird eingedampft, mit 900 g Heptan aufgenommen, dreimal mit je 900 g demin. Wasser gewaschen, 700 g Lösungsmittel abdestilliert. Das auskristallisierte Produkt wird bei 20 mbar, 130 °C und 15 h getrocknet und es werden 196 g Produkt erhalten (85 % Ausbeute). Das Produkt setzt sich zusammen aus
99,8 mol-% Verbindung der Formel (1) worin R¹ = R² = Cyclohexyl und
0,2 mol-% Verbindung der For mel (1) worin R¹ = R² = H ist.

### Beispiel 15 (Vergleich)

Nach ausreichender Trocknung wurde Polystyrol 143E (Fa. BASF) auf einer Spritzgießmaschine (Typ Aarburg Allrounder) bei Massetemperaturen von 250 bis 300 °C zu Prüfkörpern (1,6 mm) verarbeitet. Im UL-94 Test konnte keine Brandtestklassifizierung erzielt werden, da die Probekörper abbrannten.

### Beispiel 16 (Vergleich)

10 Gew.-% Cyclohexylphosphinsäure aus Beispiel 12 wurde mit 90 Gew.-% Polymergranulat (Polystyrol 143E der Fa. BASF) vermischt und auf einem Doppelschnecken-Extruder (Typ Leistritz LSM 30/34) bei Temperaturen von 250 bis 300 °C eingearbeitet. Der homogenisierte Polymerstrang wurde abgezogen, im Wasserbad gekühlt und anschließend granuliert. Nach ausreichender Trocknung wurden die Formmassen auf einer Spritzgießmaschine (Typ Aarburg Allrounder) bei Massetemperaturen von 250 bis 300 °C zu Prüfkörpern verarbeitet. Im UL-94-Flammschutztest wurde keine Klassifizierung erzielt.

### Beispiel 17

10 Gew.-% Cyclohexylphosphinsäure aus Beispiel 1 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 18

10 Gew.-% Cyclohexylphosphinsäure aus Beispiel 2 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 19

10 Gew.-% Cyclohexylphosphinsäure aus Beispiel 3 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 20

10 Gew.-% Cyclohexylphosphinsäure aus Beispiel 4 wurde mit 90 Gew.-% Polymergranulat (Polystyrol 143E der Fa. BASF) vermischt wie in Beispiel 16 eingearbeitet, granuliert und zu Prüfkörpern verarbeitet. Im UL-94-Flammschutztest wurde eine V-2 Klassifizierung erzielt.

### Beispiel 21

10 Gew.-% Cyclohexylphosphinsäure aus Beispiel 5 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 22

10 Gew.-% Cyclohexylphosphinsäure aus Beispiel 6 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 23

10 Gew.-% Cyclohexylphosphinsäure aus Beispiel 7 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 24

10 Gew.-% Cyclohexylphosphinsäure aus Beispiel 8 wurde mit 90 Gew.-% Polymergranulat (Polystyrol 143E der Fa. BASF) vermischt und wie in Beispiel 16 eingearbeitet, granuliert und zu Prüfkörpern verarbeitet. im UL-94-Flammschutztest wurde eine V-2 Klassifizierung erzielt.

### Beispiel 25

10 Gew.-% Cyclohexylphosphinsäure aus Beispiel 9 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 26

10 Gew.-% Cyclohexylphosphinsäure aus Beispiel 10 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 27

10 Gew.-% Cyclohexylphosphinsäure aus Beispiel 11 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 28

10 Gew.-% Cyclohexylphosphinsäure aus Beispiel 13 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 29

10 Gew.-% Cyclohexylphosphinsäure aus Beispiel 14 wurde mit 90 Gew.-% Polymergranulat (Polystyrol 143E der Fa. BASF) vermischt und wie in Beispiel 16 eingearbeitet, granuliert und zu Prüfkörpern verarbeitet. Im UL-94-Flammschutztest wurde eine V-2 Klassifizierung erzielt.

### Beispiel 30

In einem Vierhalskolben, ausgerüstet mit Rückflusskühler, Thermoelement, Stickstoffzuleitung und Rührer, werden 100 g reines DEN 438-Harz (Fa. Dow Chemical) vorgelegt und bei 110 °C unter Vakuum restliches Wasser entfernt. Bei 130 °C werden unter Rühren 30 g Produkt aus Beispiel 6 zugegeben. Die Temperatur der Reaktionsmischung wird auf 160 °C erhöht und dort für 2,5 h gehalten. Das Produkt wird anschließend heiß ausgegossen, abgekühlt und enthalt 23,1 % Dicyclohexylphosphinsäure. 100 Teile dieses EP-Harzes werden mit 67 Teilen Phenylnovolak PF 0790 K04 der Fa. Hexion bei T= 150 °C zu einer homogenen Mischung verschmolzen. Bei 130 °C werden 0,03 Teile Imidazolkatalysator zugesetzt. Nach weiteren 5-10 min rühren wird die homogene Mischung wird in eine Aluminiumform gegossen und anschließend 2 h bei 140 °C sowie 2 h bei 200 °C im Trockenschrank ausgehärtet und aus der Formplatte UL-94-Formkörper zugeschnitten. Die Klassifizierung der Formkörper mit 13,8 Gew.-% Produkt aus Beispiel 6 im Brandtest ist V-0.

### Beispiel 31

Es werden 30 Gew.-% Produkt aus Beispiel 3 mit 70 Gew.-% Celanex^{®} 2300 GV 1/30 (glasfaserverstärktes PBT der Fa. Celanese) auf einem Doppelschnecken-Extruder (Typ Leistritz LSM 30/34) bei Temperaturen von 250 °C zu einer flammgeschützten Polymerformmasse verarbeitet. Der homogenisierte Polymerstrang wurde abgezogen, im Wasserbad gekühlt und anschließend granuliert. Nach ausreichender Trocknung wurde die Formmassen auf einer Spritzgießmaschine (Typ Aarburg Allrounder) bei Massetemperaturen von 260 °C zu Prüfkörpern verarbeitet. Im UL-94-Flammschutztest wurde eine V-0 Klassifizierung erzielt.

### Beispiel 32

Es werden 30 Gew.-% Produkt aus Beispiel 7 mit 50 Gew.-% Polyamid des Typs Zytel 7301 der Fa. DuPont und 20 Gew-% Glasfasern des Typs Vetrotex EC 10983 der Fa. St Gobain) auf einem Doppelschnecken-Extruder (Typ Leistritz LSM 30/34) bei Temperaturen von 270 °C zu einer flammgeschützten Polymerformmasse verarbeitet. Der homogenisierte Polymerstrang wurde abgezogen, im Wasserbad gekühlt und anschließend granuliert. Nach ausreichender Trocknung wurde die Formmassen auf einer Spritzgießmaschine (Typ Aarburg Allrounder) bei Massetemperaturen von 280 °C zu Prüfkörpern verarbeitet. Im UL-94-Flammschutztest wurde eine V-0 Klassifizierung erzielt.

### Beispiel 33

Die Standardformmasse Plexiglas^{®} 7H der Fa. Evonik Röhm GmbH wurde mit einem Copolymer aus 99 Gew.-% MMA und 1 Gew.-% Methylacrylat und zusätzlich 10 % Produkt aus Beispiel 2 gemischt. Dazu wurden die beiden Polymergranulate und das Flammschutzmittel jeweils zweimal in einem 15 mm Stork Einschneckenextruder bei 230 °C extrudiert und granuliert. Die glasklaren und farblosen Compounds wurden zu Prüfkörpern verarbeitet. Im UL-94-Flammschutztest wurde eine V-0 Klassifizierung erzielt.

Insgesamt ist mit den erfindungsgemäßen Flammschutzmitteln der Beispiele 1 bis 11 sowie 13 und 14 eine höhere bzw. überhaupt eine Klassifizierung nach UL94 zu erreichen, wohingegen das technisch erhältliche Produkt des Beispiels 12 wesentlich schlechter abschneidet (keine Klassifizierung nach UL 94). Im bisher bekannten Stand der Technik wird V-0 nicht erreicht. Die erfindungsgemäßen Flammschutzmittel der Beispiele 1 bis 11 sowie 13 und 14 sind bei gegebener Dosierung also deutlich überlegen.

| | | Beispiel [g/mol] | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| NHP-MH | [106,0 g] | 106 | | 106 | 10,6 | 106 | 106 | 106 | 106 | 106 | 106 | 106 | 106 | 106 | 106 |
| H₂SO₄ | [98,0 g] | 51 | | | | | | | | | | | | | 30 |
| H₃PO₂ | [66,0 g] | | 132 | | | | | | | | | | | | |
| H₂O | | | | | | 652 | 636 | 472 | 559 | 575 | 559 | 559 | 559 | 561 | |
| Cyclohexen | [82,2 g] | 312 | 329 | 184 | 25 | 155 | 155 | 155 | 835 | 835 | 155 | 155 | 155 | 155 | |
| Cyclohexanol | [100,2 g] | | | | | | | | | | | | | | 291 |
| Bisbenzoylperoxid | [242,2 g] | 61 | 65 | | | | | | | | | | | | |
| t-Butylperoxid | [146,2 g] | | | 18,9 | | | | | | | | | | | 18,9 |
| Na₂S₂O₈ | [238,1 g] | | | | 3,3 | 17 | | 55 | 26 | 55 | 26 | 26 | 26 | 35 | |
| Wako V50 | [271,2 g] | | | | | | 30 | | | | | | | | |
| Tetranatriumpyrophosphat | [265,9 g] | | | | | | | | | | 0,4 | | | | |
| Natriumstearat | [306,5 g] | | | | | | | | | | | 1,8 | | | |
| Natriumdodecylsulfat | [288,4 g] | | | | | | | | | | | | 2,2 | | |
| Butanol | [74,1 g] | | | | | | | | | | | | | 71,809 | |
| MeOH | [32,0 g] | | | 236 | | | | | | | | | | | |
| Hac | [60,1 g] | | | | 150 | | | | | | | | | | |

| | | Beispiel | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| mol P | | 1 | 1 | 1 | 0,1 | 1 | 1 | 1 | 1 | 1 | 1 | 1 | 1 | 1 | 1 |
| mol H₂O / mol P | | 0,28 | 0,28 | 1,00 | 1,00 | 37 | 36 | 27 | 32 | 33 | 32 | 32 | 32 | 32 | 1 |
| mol Additiv / mol P | | | | 7,4 | 25,0 | | | | | | 0,002 | 0,006 | 0,008 | 0,969 | |
| mol Olefin / mol P | | 4,0 | 4,0 | 2,2 | 3,2 | 2,0 | 2,0 | 2,0 | 10,7 | 10, 7 | 2,0 | 2,0 | 2,0 | 2,0 | 0,0 |
| Init ^{*}100 | | | | 12,9 | 13,9 | 7,0 | 11,0 | 22,9 | 10,9 | 23,1 | 11,0 | 11,0 | 11,0 | 14,5 | 0,0 |
| Temperatur | [°C] | 83 | 83 | 150 | 150 | 118 | 118 | 118 | 118 | 128 | 118 | 118 | 118 | 118 | 118 |
| Zeit | [h] | 6,0 | 12,0 | 36,0 | 26,0 | 6,5 | 6,5 | 21,3 | 4,0 | 21,3 | 4,0 | 4,0 | 4,0 | 3,5 | 3,5 |

| | | Beispiel [g/mol] | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Produkt | [230,2 g] | 178 | 196 | 205 | 20 | 209 | 200 | 191 | 200 | 198 | 196 | 200 | 205 | 205 | 205 |

## Patentansprüche

1. Phosphorhaltige Mischungen, enthaltend
a) 50 - 99,9 mol-% Verbindungen der Formel (1) 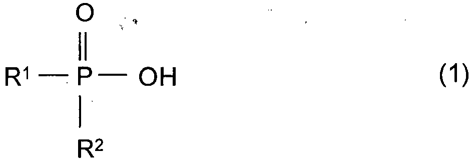 worin R¹ und R² gleich oder verschieden sind und C₆-C₉-Alkyl,
b) 0 bis 50 mol-% Verbindungen der Formel (1), worin R¹ H und R² C₆-C₉-Alkyl,
c) 0,05 bis 25 mol-% Verbindungen der Formel (1), worin R¹ OH und R² C₆-C₉-Alkyl,
d) 0,05 bis 25 mol-% Verbindungen der Formel (1), worin R¹ OH und R² H und
e) 0 bis 50 mol-% Verbindungen der Formel (1), worin R¹ H und R² H bedeuten,
wobei die Summe von a), b), c), d) und e) immer 100 mol-% ergibt.

2. Mischungen nach Anspruch 1, enthaltend
a) 50,20 bis 99,8 mol-% Verbindungen der Formel (1), worin R¹ und R² gleich oder verschieden sind und C₆-C₉-Alkyl,
b) 0,05 bis 12,55 mol-% Verbindungen der Formel (1), worin R¹ H und R² C₆-C₉-Alkyl,
c) 0,05 bis 12,55 mol-% Verbindungen der Formel (1), worin R¹ OH und R² C₆-C₉-Alkyl,
d) 0,05 bis 12,55 mol-% Verbindungen der Formel (1), worin R¹ OH und R² H und
e) 0,05 bis 12,55 mol-% Verbindungen der Formel (1), worin R¹ H und R² H bedeuten,
wobei die Summe von a), b), c), d) und e) immer 100 mol-% ergibt.

3. Mischungen nach Anspruch 1, **dadurch gekennzeichnet, dass** R¹ und R² gleich oder verschieden sind und cyclisches, isocyclisches, offenkettiges, linear offenkettiges und/oder verzweigt offenkettiges C₆-C₉-Alkyl bedeuten.

4. Mischungen nach Anspruch 1, **dadurch gekennzeichnet, dass** R¹ und R² gleich oder verschieden sind und Pentyl, Cyclopentyl, Methylpentyl, Methylcyclopentyl, Dimethylpentyl, Dimethylcyclopentyl, Trimethylpentyl, Trimethylcyclopentyl, Hexyl, Cyclohexyl, Methylhexyl, Methylcyclohexyl, Dimethylhexyl, Dimethylcyclohexyl, Trimethylhexyl und/oder Trimethylcyclohexyl bedeuten.

5. Verfahren zur Herstellung von phosphorhaltigen Mischungen nach mindestens einem der Ansprüche 1 bis 4, **dadurch gekennzeichnet, dass** man eine Phosphinatquelle, ein bei Raumtemperatur (20 - 25 °C) flüssiges Olefin und einen Radikalinitiator, gegebenenfalls unter Zusatz eines Aditives, in Gegenwart von Selektivitätslenkern in einem wässrigen Medium umsetzt.

6. Verfahren nach Anspruch 5, **dadurch gekennzeichnet, dass** es sich bei der Phosphinatquelle um Natriumhypophosphit, hypophosphorige Säure, Erdalkalihypophosphit, elementarem Phosphor, Phosphortrichlorid und/oder einer anderen Phosphinatquelle handelt.

7. Verfahren nach Anspruch 5 oder 6, **dadurch gekennzeichnet, dass** es sich bei dem flüssigen Olefin um Penten, Cyclopenten, Cyclopentadien, Hexen, Methylhexen, Dimethylhexen, Trimethylhexen, Methylhexadien, Cyclohexen, Methylcyclohexen, Dimethylcyclohexen, 1,3-Cyclohexadien, Methyl-1,3-cyclohexadien, Dimethyl-1,3-cyclohexadien, Trimethyl-1,3-cyclohexadien, 1,4-Cyclohexadien, Methyl-1,4-cyclohexadien, Dimethyl-1,4-cyclohexadien oder Mischungen davon handelt.

8. Verfahren nach einem oder mehreren der Ansprüche 5 bis 7, **dadurch gekennzeichnet, dass** es sich bei dem Selektivitätslenker um organische Phosphite, organische Phosphonite, sterisch gehinderte Amine, aromatische Amine, sterisch gehinderte Phenole, alkylierte Monophenole, Phenothiazine, Organoschwefelverbindungen, Alkylthiomethylphenole, Tocopherole, Alkylidenbisphenole, O-/N- und S-Benzylverbindungen, hydroxybenzylierte Malonate, Hydrochinone, alkylierte Hydrochinone, hydroxylierte Thiodiphenylether, Alkyliden-Bisphenole, Hydroxybenzyl-Aromaten, Triazinverbindungen, Benzylphosphonate, Acylaminophenole, Ester der beta-(3.5-Di-tert-butyl-4-hydroxyphenyl)-propionsäure mit ein- oder mehrwertigen Alkoholen, Ester der beta-(5-tert-Butyl-4-hydroxy-3-methylphenyl)-propionsäure mit ein- oder mehrwertigen Alkoholen, Ester der beta-(3,5-Dicyclohexyl-4-hydroxyphenyl)-propionsäure mit ein- oder mehrwertigen Alkoholen, Ester der 3,5-Di-tert-butyl-4-hydroxyphenylessigsäure mit ein- oder mehrwertigen Alkoholen und/oder Amide der beta-(3,5-Di-tert-butyl-4-hydroxyphenyl)-propionsäure handelt.

9. Verfahren nach einem oder mehreren der Ansprüche 5 bis 8, **dadurch gekennzeichnet, dass** es sich bei dem Radikalinitiator um wasserlösliche Peroxoverbindungen und/oder Azo-Verbindungen handelt.

10. Verfahren nach Anspruch 9, **dadurch gekennzeichnet, dass** es sich bei den Peroxoverbindungen um Kaliumpersulfat, Natriumpersulfat, Ammoniumpersulfat, Kaliumperoxomonosulfat, Natriumperoxomonosulfat, Ammoniumperoxomonosulfat, Wasserstoffperoxid, Benzoylperoxid, Di-t-butylperoxid, Dicumylperoxid, 2,4-Dichlorobenzoylperoxid, Decanoylperoxid, Laurylperoxid, Cumolhydroperoxid, Pinenhydroperoxid, p-Menthanhydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxymaleinsäure, t-Butylperoxybenzoat, Acetylcyclohexylsulfonylperoxid, Perameisensäure, Peressigsäure, 2,4-Dichlorobenzoylperoxid und/oder Decanoylperoxid handelt.

11. Verfahren nach Anspruch 9, **dadurch gekennzeichnet, dass** es sich bei den Azo-Verbindungen um
-2,2'-Azobis[2-(5-methyl-2-imidazolin-2-yl)propan]dihydrochlorid,
2,2'-Azobis[2-(2-imidazolin-2-yl)propan]dihydrochlorid,
2,2'-Azobis[2-(2-imidazolin-2-yl)propandisulfatedihydrat,
2,2'-Azobis(2-amidinopropan)hydrochlorid,
2,2'-Azobis[N-(2-carboxyethyl)-2-methylpropionamidin]tetrahydrat,
2,2'-Azobis[2-(3,4,5,6-tetrahydropyrimidin-2-yl)propan]dihydrochlorid,
2,2'-Azobis{2-[1-(2-hydroxyethyl)-2-imidazolin-2-yl]propan}dihydrochlorid,
2,2'-Azobis[2-(2-imidazolin-2-yl)propan],
2,2'-Azobis{2-Methyl-N-[1,1-bis(hydroxymethyl)-2-hydroxyethyl] propionamid,
2,2'-Azobis{2-Methyl-N-[2-(1-hydroxybuthyl)]propionamid} und/oder
2,2'-Azobis[2-Methyl-N-(2-hydroxyethyl)propionamid] handelt.

12. Verfahren nach einem oder mehreren der Ansprüche 5 bis 11, **dadurch gekennzeichnet, dass** man nach der Umsetzung die so erhaltene Mischung aufarbeitet durch
a) Versetzen der Reaktionslösung mit Mineralsäure
b) Abtrennen der dann erhaltenen Mischung
und danach mindestens einen der nachfolgenden Schritte
c) Waschen der Mischung mit Wasser
d) Trocknen der Mischung
e) Mahlen der Mischung
f) Sieben der Mischung
ausführt.

13. Verfahren nach einem oder mehreren der Ansprüche 5 bis 11, **dadurch gekennzeichnet, dass** man nach der Umsetzung die so erhaltene Mischung aufarbeitet durch
a) Versetzen der Reaktionslösung mit Mineralsäure
b) Versetzen der Reaktionslösung mit Lösungsmittel und Abtrennen der erhaltenen Lösungsmittelphase
und danach mindestens einen der nachfolgenden Schritte
c) Extraktion der Lösungsmittelphase mit Wasser
d) Einengen der Lösungsmittelphase und Kristallisieren der Mischung
e) Abtrennen der Mischung
f) Waschen der Mischung mit Wasser
g) Trocknen der Mischung
h) Mahlen der Mischung
i) Sieben der Mischung
ausführt.

14. Verfahren nach einem oder mehreren der Ansprüche 5 bis 11, **dadurch gekennzeichnet, dass** man nach der Umsetzung die so erhaltene Mischung aufarbeitet durch
a) Versetzen der Reaktionslösung mit Mineralsäure
b) Abtrennen des Feststoffes
c) Einengen der Reaktionslösung durch Eindampfen
d) Versetzen des erhaltenen Eindampfrückstandes mit Lösungsmittel und danach mindestens einen der nachfolgenden Schritte
e) Extraktion der Lösungsmittelphase mit Wasser
f) Einengen der Lösungsmittelphase und Kristallisation der erhaltenen Mischung
g) Abtrennen der Mischung
h) Trocknen der Mischung
i) Mahlen der Mischung
j) Sieben der Mischung
ausführt.

15. Verfahren nach einem oder mehreren der Ansprüche 5 bis 12, **dadurch gekennzeichnet, dass** man nach der Umsetzung die so erhaltene Mischung aufarbeitet durch
a) Eindampfen der Reaktionslösung
b) Versetzen mit Lösungsmittel
c) Versetzen der Reaktionslösung mit Mineralsäure
d) Abfiltrieren des Feststoffes von der Lösungmittelphase
e) Eindampfen der Lösungsmittelphase
f) Versetzen des erhaltenen Eindampfrückstandes mit Lösungsmittel und danach mindestens einen der nachfogenden Schritte
g) Extraktion der Lösungsmittelphase 2 mit Wasser
h) Einengen der Lösungmittelphase 2 und Kristallisation der Mischung
i) Trocknen der Mischung
j) Mahlen der Mischung
k) Sieben der Mischung
ausführt.

16. Flammfest ausgerüstete Kunststoff-Formmasse, enthaltend eine phosphorhaltige Mischung gemäß einem oder mehreren der Ansprüche 1 bis 4, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) Polypropylen, Polymethylmethacrylat (PMMA), XPS (Extrudierter Polystyrol-Hartschaum), EPS (expandiertes Polystyrol) oder PPE/HIPS (Polyphenylenether/Polystyrol-HI) Kunststoffe handelt und dass sie 50 bis 98 Gew.-% Kunststoff-Formmasse und 2 bis 50 Gew.-% der phosphorhaltigen Mischung gemäß einem oder mehreren der Ansprüche 1 bis 6 enthält.

17. Polymer-Formkörper, -Filme, -Fäden und -Fasern enthaltend eine phosphorhaltige Mischung gemäß einem oder mehreren der Ansprüche 1 bis 4, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester Polypropylen, Polymethylmethacrylat (PMMA), XPS (Extrudierter Polystyrol-Hartschaum), EPS (expandiertes Polystyrol) und/oder ABS handelt und dass sie 50 bis 98 Gew.-% Polymer-Formkörper, -Filme, -Fäden und/oder -Fasern und 2 bis 50 Gew.-% der phosphorhaltigen Mischung gemäß einem oder mehreren der Ansprüche 1 bis 4 enthält.

## Claims

1. A phosphorus-containing mixture comprising
a) from 50 to 99.9 mol% of compounds of the formula (1) 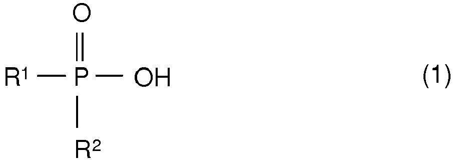 in which R¹ and R² are identical or different and are C₆-C₉-alkyl,
b) from 0 to 50 mol% of compounds of the formula (1) in which R¹ is H and R² is C₆-C₉-alkyl,
c) from 0.05 to 25 mol% of compounds of the formula (1) in which R¹ is OH and R² is C₆-C₉-alkyl,
d) from 0.05 to 25 mol% of compounds of the formula (1) in which R¹ is OH and R² is H, and
e) from 0 to 50 mol% of compounds of the formula (1) in which R¹ is H and R² is H,
where the entirety of a), b), c), d), and e) always gives 100 mol%.

2. The mixture as claimed in claim 1, comprising
a) from 50.20 to 99.8 mol% of compounds of the formula (1) in which R¹ and R² are identical or different and are C₆-C₉-alkyl,
b) from 0.05 to 12.55 mol% of compounds of the formula (1) in which R¹ is H and R² is C₆-C₉-alkyl,
c) from 0.05 to 12.55 mol% of compounds of the formula (1) in which R¹ is OH and R² is C₆-C₉-alkyl,
d) from 0.05 to 12.55 mol% of compounds of the formula (1) in which R¹ is OH and R² is H, and
e) from 0.05 to 12.55 mol% of compounds of the formula (1) in which R¹ is H and R² is H,
where the entirety of a), b), c), d), and e) always gives 100 mol%.

3. The mixture as claimed in claim 1, wherein R¹ and R² are identical or different and are cyclic, isocyclic, open-chain, linear open-chain and/or branched open-chain C₆-C₉-alkyl.

4. The mixture as claimed in claim 1, wherein R¹ and R² are identical or different and are pentyl, cyclopentyl, methylpentyl, methylcyclopentyl, dimethylpentyl, dimethylcyclopentyl, trimethylpentyl, trimethylcyclopentyl, hexyl, cyclohexyl, methylhexyl, methylcyclohexyl, dimethylhexyl, dimethylcyclohexyl, trimethylhexyl, and/or trimethylcyclohexyl.

5. A process for producing phosphorus-containing mixtures as claimed in at least one of claims 1 to 4, which comprises reacting a phosphinate source, an olefin which is liquid at room temperature (from 20 to 25°C), and a free-radical initiator, optionally with addition of an additive, in the presence of selectivity controllers in an aqueous medium.

6. The process as claimed in claim 5, wherein the phosphinate source involves sodium hypophosphite, hypophosphorous acid, alkaline earth metal hypophosphite, elemental phosphorus, phosphorus trichloride,and/or another phosphinate source.

7. The process as claimed in claim 5 or 6, wherein the liquid olefin involves pentene, cyclopentene, cyclopentadiene, hexene, methylhexene, dimethylhexene, trimethylhexene, methylhexadiene, cyclohexene, methylcyclohexene, dimethylcyclohexene, 1,3-cyclohexadiene, methyl-1,3-cyclohexadiene, dimethyl-1,3-cyclohexadiene, trimethyl-1,3-cyclohexadiene, 1,4-cyclohexadiene, methyl-1,4-cyclohexadiene, dimethyl-1,4-cyclohexadiene, or a mixture thereof.

8. The process as claimed in one or more of claims 5 to 7, wherein the selectivity controller involves organic phosphites, organic phosphonites, sterically hindered amines, aromatic amines, sterically hindered phenols, alkylated monophenols, phenothiazines, organosulfur compounds, alkylthiomethylphenols, tocopherols, alkylidenebisphenols, O-/N- and S-benzyl compounds, hydroxybenzylated malonates, hydroquinones, alkylated hydroquinones, hydroxylated thiodiphenyl ethers, alkylidene bisphenols, hydroxybenzylaromatics, triazine compounds, benzylphosphonates, acylaminophenols, esters of beta-(3,5-di-tert-butyl-4-hydroxyphenyl)propionic acid with mono- or polyhydric alcohols, esters of beta-(5-tert-butyl-4-hydroxy-3-methylphenyl)propionic acid with mono- or polyhydric alcohols, esters of beta-(3,5-dicyclohexyl-4-hydroxyphenyl)propionic acid with mono- or polyhydric alcohols, esters of 3,5-di-tert-butyl-4-hydroxyphenylacetic acid with mono- or polyhydric alcohols, and/or amides of beta-(3,5-di-tert-butyl-4-hydroxyphenyl)propionic acid.

9. The process as claimed in one or more of claims 5 to 8, wherein the free-radical initiator involves water-soluble peroxo compounds and/or azo compounds.

10. The process as claimed in claim 9, wherein the peroxo compounds involve potassium persulfate, sodium persulfate, ammonium persulfate, potassium peroxomonosulfate, sodium peroxomonosulfate, ammonium peroxomonosulfate, hydrogen peroxide, benzoyl peroxide, di-tert-butyl peroxide, dicumyl peroxide, 2,4-dichlorobenzoyl peroxide, decanoyl peroxide, lauryl peroxide, cumene hydroperoxide, pinene hydroperoxide, p-menthane hydroperoxide, tert-butyl hydroperoxide, acetylacetone peroxide, methyl ethyl ketone peroxide, succinic acid peroxide, dicetyl peroxydicarbonate, tert-butyl peroxyacetate, tert-butyl peroxymaleic acid, tert-butyl peroxybenzoate, acetylcyclohexylsulfonyl peroxide, performic acid, peracetic acid, 2,4-dichlorobenzoyl peroxide, and/or decanoyl peroxide.

11. The process as claimed in claim 9, wherein the azo compounds involve
2,2'-azobis[2-(5-methyl-2-imidazolin-2-yl)propane] dihydrochloride,
2,2'-azobis[2-(2-imidazolin-2-yl)propane] dihydrochloride,
2,2'-azobis[2-(2-imidazolin-2-yl)propane disulfate dihydrate,
2,2'-azobis(2-amidinopropane) hydrochloride,
2,2'-azobis[N-(2-carboxyethyl)-2-methylpropionamidine] tetrahydrate,
2,2'-azobis[2-(3,4,5,6-tetrahydropyrimidin-2-yl)propane] dihydrochloride,
2,2'-azobis{2-[1-(2-hydroxyethyl)-2-imidazolin-2-yl]propane} dihydrochloride,
2,2'-azobis[2-(2-imidazolin-2-yl)propane],
2,2'-azobis{2-methyl-N-[1,1-bis(hydroxymethyl)-2-hydroxyethyl]propionamide,
2,2'-azobis{2-methyl-N-[2-(1-hydroxybutyl)]propionamide} and/or
2,2'-azobis[2-methyl-N-(2-hydroxyethyl)propionamide].

12. The process as claimed in one or more of claims 5 to 11, wherein, after the reaction, the resultant mixture is worked up by
a) admixing mineral acid with the reaction solution, and
b) isolating the mixture then obtained
c) washing the mixture with water
and then at least one of the following steps is implemented
d) drying the mixture
e) grinding the mixture
f) sieving the mixture.

13. The process as claimed in one or more of claims 5 to 11, wherein, after the reaction, the resultant mixture is worked up by
a) admixing mineral acid with the reaction solution, and
b) admixing solvent with the reaction solution, and isolating the resultant solvent phase,
and then at least one of the following steps is implemented
c) extracting the solvent phase with water
d) concentrating the solvent phase and crystallizing the mixture
e) isolating the mixture
f) washing the mixture with water
g) drying the mixture
h) grinding the mixture
i) sieving the mixture.

14. The process as claimed in one or more of claims 5 to 11, wherein, after the reaction, the resultant mixture is worked up by
a) admixing mineral acid with the reaction solution
b) isolating the solid
c) concentrating the reaction solution by evaporation,
d) admixing solvent with the resultant residue from concentration by evaporation
and then at least one of the following steps is implemented
e) extracting the solvent phase with water
f) concentrating the solvent phase and crystallizing the resultant mixture
g) isolating the mixture
h) drying the mixture
i) grinding the mixture
j) sieving the mixture.

15. The process as claimed in one or more of claims 5 to 12, wherein, after the reaction, the resultant mixture is worked up by
a) concentrating the reaction solution by evaporation
b) admixing solvent
c) admixing mineral acid with the reaction solution
d) filtering the solid off from the solvent phase
e) concentrating the solvent phase by evaporation
f) admixing solvent with the resultant residue from concentration by evaporation
and then at least one of the following steps is implemented
g) extracting solvent phase 2 with water
h) concentrating solvent phase 2 and crystallizing the mixture
i) drying the mixture
j) grinding the mixture
k) sieving the mixture.

16. A flame-retardant plastics molding composition comprising a phosporus-containing mixture as claimed in one or more of claims 1 to 4, wherein the plastic involves thermoplastic polymers of the type of HI (high-impact) polystyrene, polyphenylene ethers, polyamides, polyesters, polycarbonates, and blends or polymer blends of the type of ABS (acrylonitrile-butadiene-styrene) or PC/ABS (polycarbonate/Acrylonitrile-butadiene-styrene), polypropylene, polymethyl methacrylate (PMMA), XPS (extruded rigid polystyrene foam), EPS (expanded polystyrene), or PPE/HIPS (polyphenylene ether/HI polystyrene) plastics, and wherein it comprises from 50 to 98% by weight of plastics molding composition and from 2 to 50% by weight of the phosphorus-containing mixture as claimed in one or more of claims 1 to 6.

17. A polymer molding, polymer film, polymer filament, or polymer fiber comprising a phosphorus-containing mixture as claimed in one or more of claims 1 to 4, wherein the polymer involves HI (high-impact) polystyrene, polyphenylene ethers, polyamides, polyesters, polycarbonates, and blends or polymer blends of the type of ABS (acrylonitrile-butadiene-styrene) or PC/ABS (polycarbonate/acrylonitrile-butadien-styrene), polyamide, polyester, polypropylene, polymethyl methacrylate (PMMA), XPS (extruded rigid polystyrene foam), EPS (expanded polystyrene), and/or ABS, and wherein it comprises from 50 to 98% by weight of polymer molding, polymer films, polymer filaments, and/or polymer fibers and from 2 to 50% by weight of the phosphorus-containing mixture as claimed in one or more of claims 1 to 4.

## Revendications

1. Mélanges contenant du phosphore, contenant :
a) 50 à 99,9 % en moles de composés de formule (1) 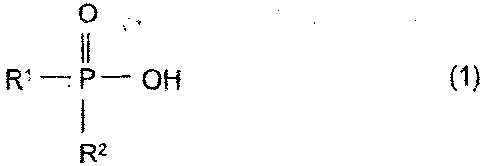 dans lesquels R¹ et R² sont identiques ou différents, et signifient alkyle en C₆-C₉,
b) 0 à 50 % en moles de composés de formule (1), dans lesquels R¹ signifie H et R² signifie alkyle en C₆-C₉,
c) 0,05 à 25 % en moles de composés de formule (1), dans lesquels R¹ signifie OH et R² signifie alkyle en C₆-C₉,
d) 0,05 à 25 % en moles de composés de formule (1), dans lesquels R¹ signifie OH et R² signifie H, et
e) 0 à 50 % en moles de composés de formule (1), dans lesquels R¹ signifie H et R² signifie H,
la somme de a), b), c), d) et e) étant toujours de 100 % en moles.

2. Mélanges selon la revendication 1, contenant :
a) 50,20 à 99,8 % en moles de composés de formule (1) dans lesquels R¹ et R² sont identiques ou différents, et signifient alkyle en C₆-C₉,
b) 0,05 à 12,55 % en moles de composés de formule (1), dans lesquels R¹ signifie H et R² signifie alkyle en C₆-C₉,
c) 0,05 à 12,55 % en moles de composés de formule (1), dans lesquels R¹ signifie OH et R² signifie alkyle en C₆-C₉,
d) 0,05 à 12,55 % en moles de composés de formule (1), dans lesquels R¹ signifie OH et R² signifie H, et
e) 0,05 à 12,55 % en moles de composés de formule (1),
dans lesquels R¹ signifie H et R² signifie H,
la somme de a), b), c), d) et e) étant toujours de 100 % en moles.

3. Mélanges selon la revendication 1, **caractérisés en ce que** R¹ et R² sont identiques ou différents, et signifient alkyle en C₆-C₉ cyclique, isocyclique, à chaîne ouverte, linéaire à chaîne ouverte et/ou ramifié à chaîne ouverte.

4. Mélanges selon la revendication 1, **caractérisés en ce que** R¹ et R² sont identiques ou différents, et signifient pentyle, cyclopentyle, méthylpentyle, méthylcyclopentyle, diméthylpentyle, diméthylcyclopentyle, triméthylpentyle, triméthylcyclopentyle, hexyle, cyclohexyle, méthylhexyle, méthylcyclohexyle, diméthylhexyle, diméthylcyclohexyle, triméthylhexyle et/ou triméthylcyclohexyle.

5. Procédé de fabrication de mélanges contenant du phosphore selon au moins l'une quelconque des revendications 1 à 4, **caractérisé en ce qu'**une source de phosphinate, une oléfine liquide à température ambiante (20 à 25 °C) et un initiateur radicalaire, éventuellement avec ajout d'un additif, sont mis en réaction dans un milieu aqueux, en présence d'agents directeurs de la sélectivité.

6. Procédé selon la revendication 5, **caractérisé en ce que** la source de phosphinate est l'hypophosphite de sodium, l'acide hypophosphoreux, un hypophosphite alcalino-terreux, le phosphore élémentaire, le trichlorure de phosphore et/ou une autre source de phosphinate.

7. Procédé selon la revendication 5 ou 6, **caractérisé en ce que** l'oléfine liquide est le pentène, le cyclopentène, le cyclopentadiène, l'hexène, le méthylhexène, le diméthylhexène, le triméthylhexène, le méthylhexadiène, le cyclohexène, le méthylcyclohexène, le diméthylcyclohexène, le 1,3-cyclohexadiène, le méthyl-1,3-cyclohexadiène, le diméthyl-1,3-cyclohexadiène, le triméthyl-1,3-cyclohexadiène, le 1,4-cyclohexadiène, le méthyl-1,4-cyclohexadiène, le diméthyl-1,4-cyclohexadiène ou leurs mélanges.

8. Procédé selon une ou plusieurs des revendications 5 à 7, **caractérisé en ce que** l'agent directeur de la sélectivité consiste en des phosphites organiques, des phosphonites organiques, des amines à encombrement stérique, des amines aromatiques, des phénols à encombrement stérique, des monophénols alkylés, des phénothiazines, des composés de soufre organiques, des alkylthiométhylphénols, des tocophérols, des alkylidène-bisphénols, des composés d'O-/N- et S-benzyle, des malonates hydroxybenzylés, des hydroquinones, des hydroquinones alkylées, des éthers thiodiphényliques hydroxylés, des alkylidène-bisphénols, des composés aromatiques d'hydroxybenzyle, des composés de triazine, des phosphonates de benzyle, des acylaminophénols, des esters de l'acide bêta-(3,5-di-tert-butyl-4-hydroxyphényl)-propionique avec des alcools mono- ou polyvalents, des esters de l'acide bêta-(5-tert-butyl-4-hydroxy-3-méthylphényl)-propionique avec des alcools mono- ou polyvalents, des esters de l'acide bêta-(3,5-dicyclohexyl-4-hydroxyphényl)-propionique avec des alcools mono- ou polyvalents, des esters de l'acide 3,5-di-tert-butyl-4-hydroxyphénylacétique avec des alcools mono- ou polyvalents et/ou des amides de l'acide bêta-(3,5-di-tert-butyl-4-hydroxyphényl)-propionique.

9. Procédé selon une ou plusieurs des revendications 5 à 8, **caractérisé en ce que** l'initiateur radicalaire consiste en des composés peroxo solubles dans l'eau et/ou des composés azo.

10. Procédé selon la revendication 9, **caractérisé en ce que** les composés peroxo sont le persulfate de potassium, le persulfate de sodium, le persulfate d'ammonium, le peroxomonosulfate de potassium, le peroxomonosulfate de sodium, le peroxomonosulfate d'ammonium, le peroxyde d'hydrogène, le peroxyde de benzoyle, le peroxyde de dit-butyle, le peroxyde de dicumyle, le peroxyde de 2,4-dichlorobenzoyle, le peroxyde de décanoyle, le peroxyde de lauryle, l'hydroperoxyde de cumène, l'hydroperoxyde de pinène, l'hydroperoxyde de p-menthane, l'hydroperoxyde de t-butyle, le peroxyde d'acétylacétone, le peroxyde de méthyléthylcétone, le peroxyde de l'acide succinique, le peroxydicarbonate de dicétyle, le peroxyacétate de t-butyle, l'acide t-butylperoxymaléique, le peroxybenzoate de t-butyle, le peroxyde d'acétylcyclohexylsulfonyle, l'acide performique, l'acide peracétique, le peroxyde de 2,4-dichlorobenzoyle et/ou le peroxyde de décanoyle.

11. Procédé selon la revendication 9, **caractérisé en ce que** les composés azo sont
le dichlorhydrate de 2,-2'-azobis[2-(5-méthyl-2-imidazolin-2-yl)propane],
le dichlorhydrate de 2,2'-azobis[2-(2-imidazolin-2-yl)propane],
le disulfate-dihydrate de 2,2'-azobis[2-(2-imidazolin-2-yl)propane,
le chlorhydrate de 2,2'-azobis(2-amidinopropane),
le tétrahydrate de 2,2'-azobis[N-(2-carboxyéthyl)-2-méthylpropionamidine],
le dichlorhydrate de 2,2'-azobis[2-(3,4,5,6-tétrahydropyrimidin-2-yl)propane],
le dichlorhydrate de 2,2'-azobis{2-[1-(2-hydroxyéthyl)-2-imidazolin-2-yl]propane},
le 2,2'-azobis[2-(2-imidazolin-2-yl)propane],
le 2,2'-azobis{2-méthyl-N-[1,1-bis(hydroxyméthyl)-2-hydroxyéthyl]propionamide,
le 2,2'-azobis{2-méthyl-N-[2-(1-hydroxybuthyl)]propionamide} et/ou
le 2,2'-azobis[2-méthyl-N-(2-hydroxyéthyl)propionamide].

12. Procédé selon une ou plusieurs des revendications 5 à 11, **caractérisé en ce qu'**après la réaction, le mélange ainsi obtenu est traité par :
a) mélange de la solution réactionnelle avec un acide minéral,
b) séparation du mélange ainsi obtenu,
puis au moins une des étapes suivantes :
c) lavage du mélange avec de l'eau,
d) séchage du mélange,
e) broyage du mélange,
f) tamisage du mélange,
est réalisée.

13. Procédé selon une ou plusieurs des revendications 5 à 11, **caractérisé en ce qu'**après la réaction, le mélange ainsi obtenu est traité par :
a) mélange de la solution réactionnelle avec un acide minéral,
b) mélange de la solution réactionnelle avec un solvant et séparation de la phase solvant obtenue,
puis au moins une des étapes suivantes :
c) extraction de la phase solvant avec de l'eau,
d) concentration de la phase solvant et cristallisation du mélange,
e) séparation du mélange,
f) lavage du mélange avec de l'eau,
g) séchage du mélange,
h) broyage du mélange,
i) tamisage du mélange,
est réalisée.

14. Procédé selon une ou plusieurs des revendications 5 à 11, **caractérisé en ce qu'**après la réaction, le mélange ainsi obtenu est traité par :
a) mélange de la solution réactionnelle avec un acide minéral,
b) séparation des solides,
c) concentration de la solution réactionnelle par évaporation,
d) mélange du résidu d'évaporation obtenu avec un solvant,
puis au moins une des étapes suivantes :
e) extraction de la phase solvant avec de l'eau,
f) concentration de la phase solvant et cristallisation du mélange obtenu,
g) séparation du mélange,
h) séchage du mélange,
i) broyage du mélange,
j) tamisage du mélange,
est réalisée.

15. Procédé selon une ou plusieurs des revendications 5 à 12, **caractérisé en ce qu'**après la réaction, le mélange ainsi obtenu est traité par :
a) évaporation de la solution réactionnelle,
b) mélange avec un solvant,
c) mélange de la solution réactionnelle avec un acide minéral,
d) filtration des solides de la phase solvant,
e) évaporation de la phase solvant,
f) mélange du résidu d'évaporation obtenu avec un solvant,
puis au moins une des étapes suivantes :
g) extraction de la phase solvant 2 avec de l'eau,
h) concentration de la phase solvant 2 et cristallisation du mélange,
i) séchage du mélange,
j) broyage du mélange,
k) tamisage du mélange,
est réalisée.

16. Matériau de moulage en plastique ignifugé, contenant un mélange contenant du phosphore selon une ou plusieurs des revendications 1 à 4, **caractérisé en ce que** le plastique consiste en des polymères thermoplastiques de type polystyrène HI (High Impact), éther de polyphénylène, polyamides, polyesters, polycarbonates et mélanges ou alliages polymères de type ABS (acrylonitrile-butadiène-styrène) ou PC/ABS (polycarbonate/acrylonitrile-butadiène-styrène), polypropylène, polyméthacrylate de méthyle (PMMA), XPS (mousse dure de polystyrène extrudée), EPS (polystyrène expansé) ou PPE/HIPS (éther de polyphénylène/polystyrène HI), et **en ce qu'**il contient 50 à 98 % en poids du matériau de moulage en plastique et 2 à 50 % en poids du mélange contenant du phosphore selon une ou plusieurs des revendications 1 à 6.

17. Corps moulés, films, fils et fibres polymères contenant un mélange contenant du phosphore selon une ou plusieurs des revendications 1 à 4, **caractérisés en ce que** le polymère consiste en le polystyrène HI (High Impact), l'éther de polyphénylène, les polyamides, les polyesters, les polycarbonates et les mélanges ou alliages polymères de type ABS (acrylonitrile-butadiène-styrène) ou PC/ABS (polycarbonate/acrylonitrile-butadiène-styrène), polyamide, polyester, polypropylène, polyméthacrylate de méthyle (PMMA), XPS (mousse dure de polystyrène extrudée), EPS (polystyrène expansé) et/ou ABS, et **en ce qu'**ils contiennent 50 à 98 % en poids de corps moulés, films, fils et/ou fibres polymères et 2 à 50 % en poids du mélange contenant du phosphore selon une ou plusieurs des revendications 1 à 4.
